# EUROPEAN PATENT SPECIFICATION

(11) **EP 2 854 098 B1**
(45) Date of publication and mention of the grant of the patent: **19.09.2018**
(21) Application number: 13793824.7
(22) Date of filing: 08.03.2013
(51) Int. Cl.: G06T 3/00, G06T 5/00, G06T 5/50, G08G 1/16

(54) **VEHICLE SURROUNDINGS IMAGE DISPLAY CONTROL DEVICE, VEHICLE SURROUNDINGS IMAGE DISPLAY CONTROL METHOD, NON-TRANSITORY TANGIBLE COMPUTER-READ MEDIUM COMPRISING COMMAND CONTAINING SAID METHOD, AND IMAGE PROCESSING METHOD EFFECTING TOP-VIEW CONVERSION AND DISPLAY OF IMAGE OF VEHICLE SURROUNDINGS**
VORRICHTUNG ZUR STEUERUNG DER ANZEIGE VON BILDERN EINER FAHRZEUGUMGEBUNG, VERFAHREN ZUR STEUERUNG DER ANZEIGE VON BILDERN EINER FAHRZEUGUMGEBUNG, ÜBERGANGSLOSES, GREIFBARES, COMPUTERLESBARES SPEICHERMEDIUM MIT EINEM BEFEHL MIT DIESEM VERFAHREN SOWIE BILDVERARBEITUNGSVERFAHREN MIT TOP-VIEW-UMWANDLUNG UND ANZEIGE VON BILDERN EINER FAHRZEUGUMGEBUNG
DISPOSITIF DE COMMANDE D'AFFICHAGE D'IMAGE D'ENVIRONS DE VÉHICULE, PROCÉDÉ DE COMMANDE D'AFFICHAGE D'IMAGE D'ENVIRONS DE VÉHICULE, SUPPORT LISIBLE PAR ORDINATEUR, TANGIBLE, NON TRANSITOIRE COMPRENANT UNE INSTRUCTION CONTENANT LEDIT PROCÉDÉ, ET PROCÉDÉ DE TRAITEMENT D'IMAGE EFFECTUANT UNE CONVERSION DE VUE DE DESSUS ET UN AFFICHAGE DE L'IMAGE DES ENVIRONS DU VÉHICULE

(30) Priority: 23.05.2012 JP 2012117762
(43) Date of publication of application: 01.04.2015
(73) Proprietor: Denso Corporation, Kariya-shi, Aichi 448-8661 (JP)
(72) Inventor: YANAGAWA, Hirohiko, Kariya-city Aichi 448-8661 (JP); TAKEICHI, Masakazu, Kariya-city Aichi 448-8661 (JP); WANG, Bingchen, Kariya-city Aichi 448-8661 (JP)
(74) Representative: Cabinet Plasseraud
(86) International application number: PCT/JP2013/001489
(87) International publication number: WO 2013/175684

(56) References cited:
- EP-A2- 1 964 719
- WO-A1-2009/057410
- DE-A1-102007 017 038
- JP-A- 2002 373 327
- JP-A- 2007 300 559

## Description

### CROSS REFERENCE TO RELATED APPLICATION

This application is based on Japanese Patent Application No. 2012-117762 filed on May 23, 2012.

### TECHNICAL FIELD

The present disclosure relates to a vehicle surrounding image display control device, a vehicle surrounding image display control method, a non-transitory tangible computer-readable medium comprising instructions including the method, and an image processing method of executing top-view conversion and display of an image of vehicle surroundings.

### BACKGROUND ART

Up to now, a technique has been known in which vehicle surroundings are repetitively photographed with a camera attached to a vehicle, a photographed image is subjected to bird's-eye view conversion into an image in a viewpoint overlooking the vehicle from above, and a bird's-eye view image that has been subjected to the bird's-eye view conversion is displayed on an image display device.

In the above technique, a technique (called "history synthesis technology") has been known in which a synthesized bird's-eye view image which is synthesized from a bird's-eye view image of a latest taken image and a bird's-eye view image of a past taken image is displayed on the image display device to enlarge an image display area of the vehicle surroundings (refer to Patent Literature 1).

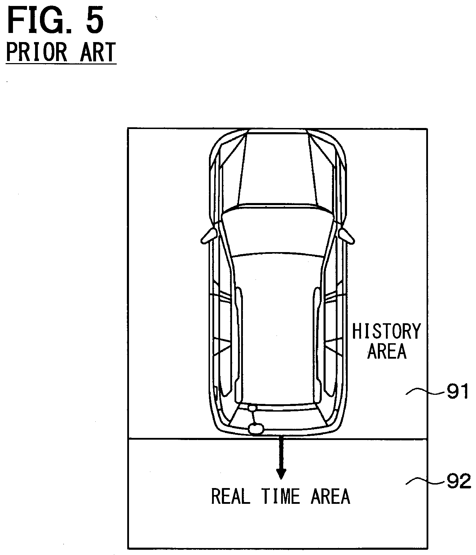

For example, if the camera is a rear camera that photographs the rear of the vehicle, as illustrated in FIG. 5, a history area 91 for saving the surrounding bird's-eye view image except for the rear of the vehicle, and a real time area 92 for saving the bird's-eye view image of the rear of the vehicle are provided in a memory. Then, the bird's-eye view image of the latest taken image is overwritten in the real time area 92 on the memory, the synthesized bird's-eye view image in the history area 91 and the real time area 92 is displayed on the image display device, the movement of the vehicle is calculated on the basis of vehicle information (steering angle, vehicle velocity, etc.), and the image moves in the history area 91 and the real time area 92 so as to execute the reverse movement of the calculated movement of the vehicle.

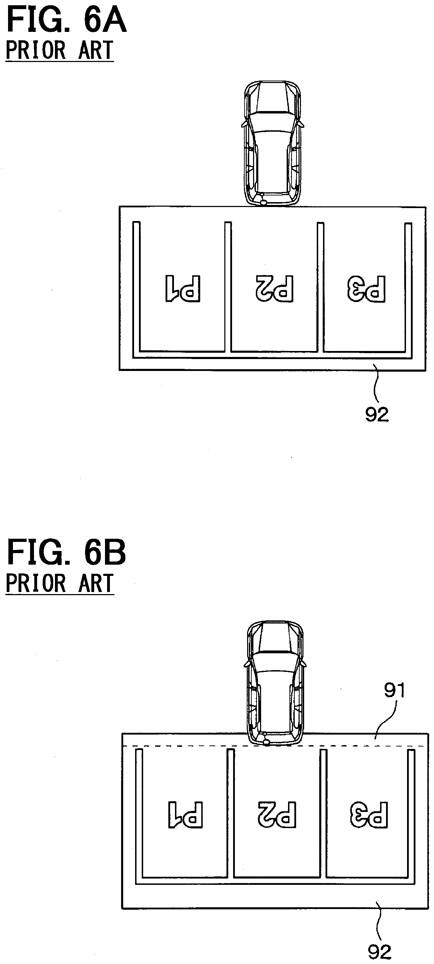

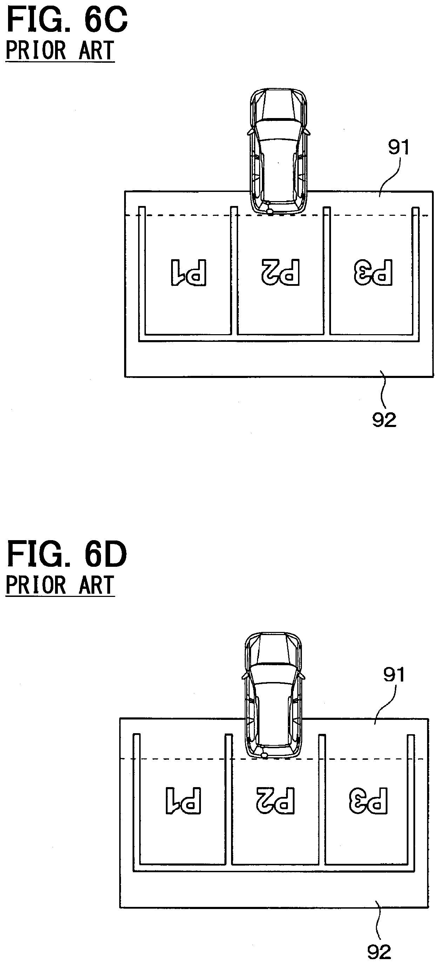

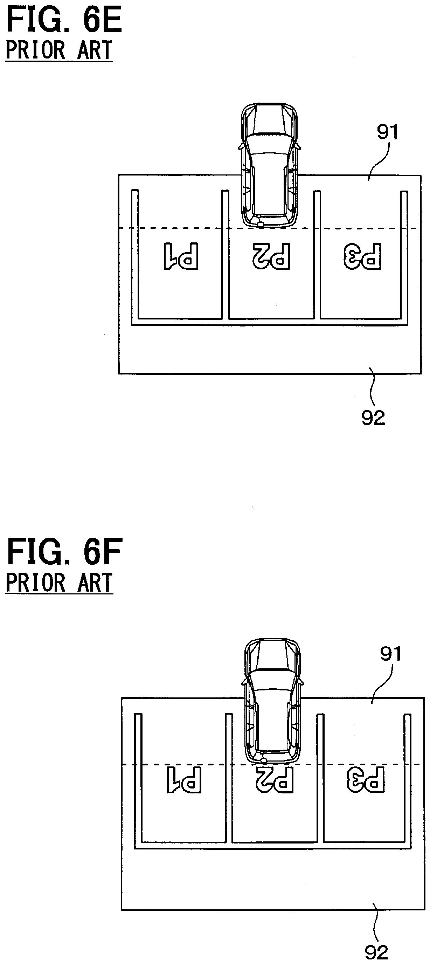

With the repetition of the above processing, in an image displayed on the image display device, for example, when the vehicle travels back, the vehicle travels back in order of FIGS. 6A to 6F, and the image that has been present in the real time area 92 sequentially moves to the history area 91. Therefore, an area of the bird's-eye view image included in the history area 91 sequentially enlarges, and a display area around the vehicle enlarges.

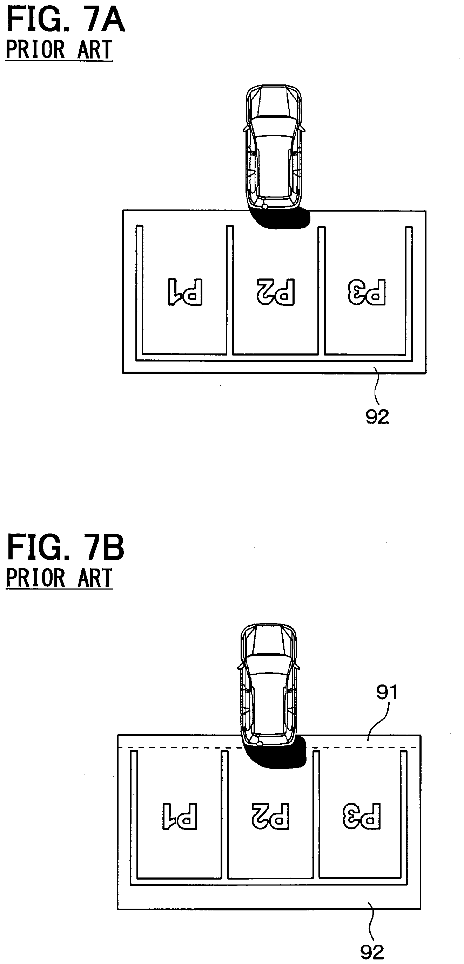

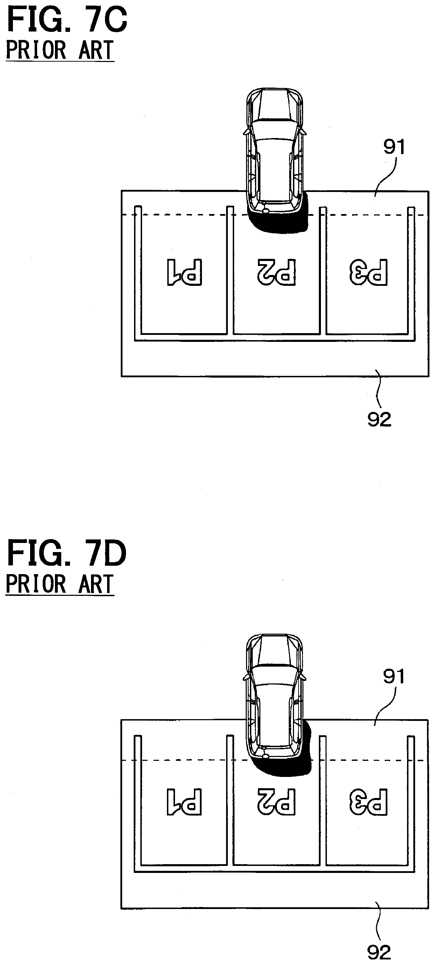

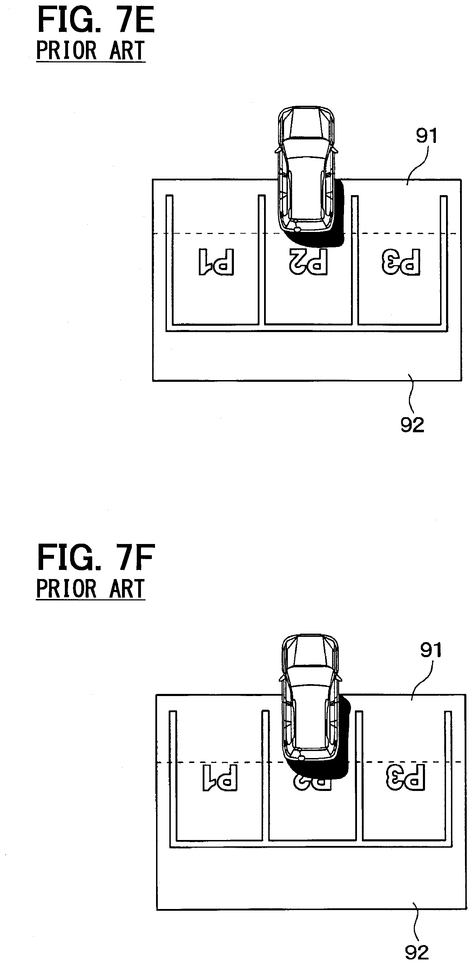

However, in the above technique, as exemplified in FIGS. 7A to 7F, if a shadow of a subject vehicle is present in the image taken by the camera, the shadow continues to move into the history area 91 together with the travel of the subject vehicle. Therefore, an image of the shadow enlarges in a synthesized bird's-eye view image displayed on the image display device, resulting in a synthesized bird's-eye view image in which the surroundings of the vehicle is difficult to view.

### PRIOR ART LITERATURES

### PATENT LITERATURE

Patent Literature 1: JP-A-2002-373327 (corresponding to US Publication No. 20030165255)
Patent Literature 2: JP-A-2010-237976
Patent Literature 3: DE 10 2007 017 038 A1

### NON PATENT LITERATURE

Non Patent Literature 1: Michitaka Nishimoto, Takashi Izumi, "for vehicle detection based on shadow extraction", Electrical Engineers ITS Study Group, ITS-06-14, pages 7 to 12, June of 2006

### SUMMARY OF INVENTION

It is an object of the present disclosure to provide a vehicle surrounding image display control device, a vehicle surrounding image display control method, a non-transitory tangible computer-readable medium comprising instructions including the method, and an image processing method of executing top-view conversion and display of an image of vehicle surroundings. In the vehicle surrounding image display control device, the vehicle surrounding image display control method, the non-transitory tangible computer-readable medium comprising instructions including the method, and the image processing method of executing top-view conversion and display of an image of vehicle surroundings, a possibility that a shadow of a subject vehicle enlarges in a synthesized bird's-eye view image together with the travel of the vehicle is reduced through a history synthesis technology in which the synthesized bird's-eye view image that is synthesized from a bird's-eye view image of a latest taken image and a bird's-eye view image of a past taken image is displayed on an image display device.

According to a first aspect of the present application, a vehicle surrounding image display control device according to claim 1 includes: an acquisition device that repetitively acquires a taken image around a vehicle from an in-vehicle camera mounted in the vehicle; a bird's-eye view conversion device that sequentially executes a bird's-eye view conversion of the taken image and creates a bird's-eye view image; a division storage device that divides the bird's-eye view image along a front-back direction of the vehicle to create a A bird's-eye view image in a predetermined A area farther from the vehicle and a B bird's-eye view image in a predetermined B area closer to the vehicle, stores the A bird's-eye view image in a real area A of a memory, and stores the B bird's-eye view image in a real area B of the memory; a shadow determination device that determines whether a shadow is present in the B bird's-eye view image stored in a part or all of the B real area; a movement calculation device that calculates an amount of movement of the vehicle based on vehicle behavior information input from the vehicle; a first history image configuration device that: configures a C bird's-eye view image in a C history area of the memory using the B bird's-eye view image stored in the B real area according to the amount of movement of the vehicle so that the C bird's-eye view image in the C history area of the memory for storing a bird's-eye view image in an C area outside of a photographing area of the in-vehicle camera reflects a present surrounding layout of the vehicle; and configures a B history bird's-eye view image in a B history area using the A bird's-eye view image stored in the A real area according to the amount of movement of the vehicle so that the B bird's-eye view image in the B history area of the memory for storing a bird's-eye view image in a same area as the B real area reflects the present surrounding layout of the vehicle, when the shadow determination device determines that the shadow is not present in the B bird's-eye view image; a second history image configuration device that: configures the C bird's-eye view image in the C history area using the B history bird's-eye view image stored in the B history area according to the amount of movement of the vehicle so that the C bird's-eye view image in the C history area of the memory reflects the present surrounding layout of the vehicle; and configures the B history bird's-eye view image in the B history area using the A bird's-eye view image stored in the A real area according to the amount of movement of the vehicle so that the B bird's-eye view image in the B history area reflects the present surrounding layout of the vehicle, when the shadow determination device determines that the shadow is present in the B bird's-eye view image; and a display control device that controls the image display device to display the A bird's-eye view image in the A real area, the C bird's-eye view image in the C history area, and the B bird's-eye view image in the B real area or the B history bird's-eye view image in the B history area.

In the above device, whether the B bird's-eye view image in the B real area, or the B history bird's-eye view image in the B history area is used as an original image of a history synthesis (configuring the C bird's-eye view image within the C history area) can be selected according to presence or absence of the shadow. With the above configuration, if a shadow is present, since the history synthesis is conducted with the use of the B history bird's-eye view image in the B history area configured on the basis of the A bird's-eye view image (image high in a possibility that the shadow is absent) in the A real area, a possibility that the shadow of the subject vehicle enlarges within the C history area can be reduced. Also, if the shadow is absent, since the history synthesis is conducted with the use of the B bird's-eye view image in the B real area, a timing of taking the C bird's-eye view image within the C history area becomes relatively new.

Alternatively, the first history image configuration device: sequentially updates the A real area, the B real area, and the C history area so that the bird's-eye view image moves in a joining area that joins an A area, which is a display area of the A bird's-eye view image, an B area, which is a display area of the B bird's-eye view image, and an C area, which is a display area of the C bird's-eye view image, according to the amount of movement of the vehicle; and sequentially updates the B history area and the A real area so that the bird's-eye view image moves in a joining area that joins a B area, which is a display area of the B history bird's-eye view image, and an A area, which is a display area of the A bird's-eye view image, when the shadow determination device determines that the shadow is not present in the B bird's-eye view image. The second history image configuration device: sequentially updates the A real area, the B history area, and the C history area so that the bird's-eye view image moves in a joining area that joins an A area, which is a display area of the A bird's-eye view image, a B area, which is a display area of the B history bird's-eye view image, and a C area, which is a display area of the C bird's-eye view image, according to the amount of movement of the vehicle, when the shadow determination device determines that the shadow is present in the B bird's-eye view image.

According to a second aspect of the present application, a vehicle surrounding image display method according to claim 5 includes: repetitively acquiring a taken image around a vehicle from an in-vehicle camera mounted in a vehicle; sequentially executing a bird's-eye view conversion of the taken image to create a bird's-eye view image; dividing the bird's-eye view image along a front-back direction of the vehicle to create a A bird's-eye view image in a predetermined A area farther from the vehicle, and a B bird's-eye view image in a predetermined B area closer to the vehicle, storing the A bird's-eye view image in a A real area of a memory, and storing the B bird's-eye view image in a B real area of the memory; determining whether a shadow is present in the bird's-eye view image stored in a part or all of the B real area; calculating an amount of movement of the vehicle based on vehicle behavior information input from the vehicle; configuring a C bird's-eye view image in a C history area using the B bird's-eye view image stored in the B real area according to the amount of movement of the vehicle so that the C bird's-eye view image in the C history area of the memory for storing a bird's-eye view image in an C area outside of a photographing area of the in-vehicle camera reflects a present surrounding layout of the vehicle, and configuring a B history bird's-eye view image in the B history area using the A bird's-eye view image stored in the A real area according to the amount of movement of the vehicle so that the B history bird's-eye view image in the B history area of the memory for storing a bird's-eye view image in a same area as the B real area reflects the present surrounding layout of the vehicle, when the shadow is not present in the B bird's-eye view image; configuring the C bird's-eye view image in the C history area using the B history bird's-eye view image stored in the B history area according to the amount of movement of the vehicle so that the C bird's-eye view image in the C history area of the memory reflects a present surrounding layout of the vehicle, and configuring the B history bird's-eye view image in the B history area using the A bird's-eye view image stored in the A real area according to the amount of movement of the vehicle so that the B history bird's-eye view image in the B history area reflects the present surrounding layout of the vehicle, when the shadow is present in the B bird's-eye view image; and controlling the image display device to display the A bird's-eye view image in the A real area, the C bird's-eye view image in the C history area, and the B bird's-eye view image in the B real area or the B history bird's-eye view image in the B history area.

In the above method, whether the B bird's-eye view image in the B real area, or the B history bird's-eye view image in the B history area is used as an original image of a history synthesis (configuring the C bird's-eye view image within the C history area) can be selected according to presence or absence of the shadow. With the above configuration, if a shadow is present, since the history synthesis is conducted with the use of the B history bird's-eye view image in the B history area configured on the basis of the A bird's-eye view image (image high in a possibility that the shadow is absent) in the A real area, a possibility that the shadow of the subject vehicle enlarges within the C history area can be reduced. Also, if the shadow is absent, since the history synthesis is conducted with the use of the B bird's-eye view image in the B real area, a timing of taking the C bird's-eye view image within the C history area becomes relatively new.

According to a third aspect of the present application, a non-transitory tangible computer-readable according to claim 6 includes instructions being executed by a computer, the instructions including a computer-implemented method for controlling to display a vehicle surrounding image, the instructions including: repetitively acquiring a taken image around a vehicle from an in-vehicle camera mounted in a vehicle; sequentially executing a bird's-eye view conversion of the taken image to create a bird's-eye view image; dividing the bird's-eye view image along a front-back direction of the vehicle to create a A bird's-eye view image in a predetermined A area farther from the vehicle, and a B bird's-eye view image in a predetermined B area closer to the vehicle, storing the A bird's-eye view image in a A real area of a memory, and storing the B bird's-eye view image in a B real area of the memory; determining whether a shadow is present in the bird's-eye view image stored in a part or all of the B real area; calculating an amount of movement of the vehicle based on vehicle behavior information input from the vehicle; configuring a C bird's-eye view image in a C history area using the B bird's-eye view image stored in the B real area according to the amount of movement of the vehicle so that the C bird's-eye view image in the C history area of the memory for storing a bird's-eye view image in an C area outside of a photographing area of the in-vehicle camera reflects a present surrounding layout of the vehicle, and configuring a B history bird's-eye view image in the B history area using the A bird's-eye view image stored in the A real area according to the amount of movement of the vehicle so that the B history bird's-eye view image in the B history area of the memory for storing a bird's-eye view image in a same area as the B real area reflects the present surrounding layout of the vehicle, when the shadow is not present in the B bird's-eye view image; configuring the C bird's-eye view image in the C history area using the B history bird's-eye view image stored in the B history area according to the amount of movement of the vehicle so that the C bird's-eye view image in the C history area of the memory reflects the present surrounding layout of the vehicle, and configuring the B history bird's-eye view image in the B history area using the A bird's-eye view image stored in the A real area according to the amount of movement of the vehicle so that the B history bird's-eye view image in the B history area reflects the present surrounding layout of the vehicle, when the shadow is present in the B bird's-eye view image; and controlling the image display device to display the A bird's-eye view image in the A real area, the C bird's-eye view image in the C history area, and the B bird's-eye view image in the B real area or the B history bird's-eye view image in the B history area.

In the above non-transitory tangible computer-readable medium, whether the B bird's-eye view image in the B real area, or the B history bird's-eye view image in the B history area is used as an original image of a history synthesis (configuring the C bird's-eye view image within the C history area) can be selected according to presence or absence of the shadow. With the above configuration, if a shadow is present, since the history synthesis is conducted with the use of the B history bird's-eye view image in the B history area configured on the basis of the A bird's-eye view image (image high in a possibility that the shadow is absent) in the A real area, a possibility that the shadow of the subject vehicle enlarges within the C history area can be reduced. Also, if the shadow is absent, since the history synthesis is conducted with the use of the B bird's-eye view image in the B real area, a timing of taking the C bird's-eye view image within the C history area becomes relatively new.

According to a further example of the present application, an image processing method of sequentially acquiring an image around a vehicle from an in-vehicle camera mounted in the vehicle, executing a top view conversion of the image, and displaying the image on an image display device mounted in the vehicle, the image processing method includes: dividing the image after executing the top view conversion into two image pieces; determining whether a shadow of the vehicle is included in a short-range image closer to the vehicle in divided image pieces; and replacing a present short-range image with a history image of a long-range image farther from the vehicle, which is taken before a predetermined time when the shadow of the vehicle is included in the short-range image.

In the above image processing method, if the shadow of the vehicle is included, the history image of the long-range image is used as the original image of the history synthesis. With the above method, the possibility that the shadow of the subject vehicle enlarges can be reduced by the history synthesis.

According to a further example of the present disclosure, a vehicle surrounding image display control device that acquires an image around a vehicle from an in-vehicle camera mounted in the vehicle, executes a top view conversion of the image to store the image in a memory, and displays the image on an image display device, the vehicle surrounding image display control device includes: an acquisition device that repetitively acquires a taken image around the vehicle; a top view conversion device that sequentially executes the top view conversion of the taken image to create a series of top view image group; a division storage device that: divides a latest top view image along a front-back direction of the vehicle when the latest top view image in a created series of top view image group is stored in the memory; stores a long-range top view image farther from the vehicle in an A real area; and stores a short-range top view image closer to the vehicle in a B real area; a shadow determination device that determines whether a shadow of the vehicle is reflected on the latest short-range top view image stored in the B real area; a movement calculation device that calculates an amount of movement of the vehicle based on vehicle behavior information input from the vehicle; a first history image configuration device that: sets a C history area, which stores the history image outside of a photographing area of the in-vehicle camera and corresponding to a surrounding layout of the vehicle, and a B history area, which stores a short-range top view image in a same area as the B real area in the memory; and overwrites the C history area with the short-range top view image stored in the B real area, and overwrites the B history area with the long-range top view image stored in the A real area, according to the amount of movement of the vehicle, when the shadow determination device determines that the shadow is not present; a second history image configuration device that overwrites the C history area with the short-range top view image stored in the B history area, and overwrites the B history area with the long-range top view image stored in the A real area, according to the amount of movement of the vehicle, when the shadow determination device determines that the shadow is present; and a display control device that controls the image display device to display the long-range top view image in the A real area, the history image in the C history area, and the short-range top view image in the B real area or in the B history area.

In the above device, whether the short-range top view image in the B real area, or the short-range top view image in the B history area is used as an original image of a history synthesis (configuring the history image within the C history area) can be selected according to presence or absence of the shadow. With the above configuration, if a shadow is present, since the history synthesis is conducted with the use of the short-range top view image in the B history area configured on the basis of the long-range top view image (image high in a possibility that the shadow is absent) in the A real area, a possibility that the shadow of the subject vehicle enlarges within the C history area can be reduced. Also, if the shadow is absent, since the history synthesis is conducted with the use of the short-range top view image in the B real area, a timing of taking the history image within the C history area becomes relatively new.

According to a sixth aspect of the present disclosure, a vehicle surrounding image display control device includes: an acquisition device that repetitively acquires a taken image around a vehicle from an in-vehicle camera mounted in the vehicle; a bird's-eye view conversion device that sequentially executes a bird's-eye view conversion of the taken image and creates a bird's-eye view image; a movement calculation device that calculates an amount of movement of the vehicle based on vehicle behavior information input from the vehicle; a memory that includes a B real area for storing a B bird's-eye view image in a predetermined B area around the vehicle, an A real area for storing an A bird's-eye view image A in a predetermined A area farther from the vehicle than the B area, a B history area for storing as a B history bird's-eye view image, which is prepared by moving a relative position of the A bird's-eye view image stored in the A real area with respect to the vehicle according to the amount of movement of the vehicle calculated by the movement calculation device, and a C history area for storing as a bird's-eye view image C, which is prepared by moving a relative position of the B history bird's-eye view image stored in the B history area or the B bird's-eye view image stored in the B real area with respect to the vehicle according to the amount of movement of the vehicle calculated by the movement calculation device; a division storage device that divides the bird's-eye view image along a front-back direction of the vehicle to create the A bird's-eye view image and the B bird's-eye view image, stores the A bird's-eye view image in the A real area, and stores the B bird's-eye view image in the B real area; a shadow determination device that determines whether a shadow is present in the B bird's-eye view image stored in a part or all of the B real area; a first history image configuration device that configures the C bird's-eye view image in the C history area using the B bird's-eye view image stored in the B real area when the shadow determination device determines that the shadow is not presented in the B bird's-eye view image; a second history image configuration device that configures the C bird's-eye view image in the C history area using the B history bird's-eye view image stored in the B history area when the shadow determination device determines that the shadow is present in the B bird's-eye view image; and a display control device that controls the image display device to display the A bird's-eye view image in the A real area, the C bird's-eye view image in the C history area, and the B bird's-eye view image in the B real area or the B history bird's-eye view image in the B history area.

In the above device, whether the B bird's-eye view image in the B real area, or the B history bird's-eye view image in the B history area is used as an original image of a history synthesis (configuring the C bird's-eye view image within the C history area) can be selected according to presence or absence of the shadow. With the above configuration, if a shadow is present, since the history synthesis is conducted with the use of the B history bird's-eye view image in the B history area configured on the basis of the A bird's-eye view image (image high in a possibility that the shadow is absent) in the A real area, a possibility that the shadow of the subject vehicle enlarges within the C history area can be reduced. Also, if the shadow is absent, since the history synthesis is conducted with the use of the B bird's-eye view image in the B real area, a timing of taking the C bird's-eye view image within the C history area becomes relatively new.

### BRIEF DESCRIPTION OF DRAWINGS

The above and other objects, features and advantages of the present disclosure will become more apparent from the following detailed description made with reference to the accompanying drawings. In the drawings:
[FIG. 1] FIG. 1 is a diagram illustrating a configuration of a vehicle surrounding image display system according to an embodiment;
[FIG. 2] FIG. 2 is a diagram illustrating a real area A, a real area B, a history area C, and a history area B in a memory;
[FIG. 3] FIG. 3 is a flowchart of processing to be executed by a control device;
[FIG. 4A] FIG. 4A is a diagram illustrating a synthesized bird's-eye view image that changes together with the backing of the vehicle when the shadow is present;
[FIG. 4B] FIG. 4B is a diagram illustrating a synthesized bird's-eye view image that changes together with the backing of the vehicle when the shadow is present;
[FIG. 4C] FIG. 4C is a diagram illustrating a synthesized bird's-eye view image that changes together with the backing of the vehicle when the shadow is present;
[FIG. 4D] FIG. 4D is a diagram illustrating a synthesized bird's-eye view image that changes together with the backing of the vehicle when the shadow is present;
[FIG. 4E] FIG. 4E is a diagram illustrating a synthesized bird's-eye view image that changes together with the backing of the vehicle when the shadow is present;
[FIG. 4F] FIG. 4F is a diagram illustrating a synthesized bird's-eye view image that changes together with the backing of the vehicle when the shadow is present;
[FIG. 5] FIG. 5 is a diagram illustrating a history area and a real time area in a memory as a prior art;
[FIG. 6A] FIG. 6A is a diagram illustrating a synthesized bird's-eye view image that changes together with the backing of the vehicle as the prior art;
[FIG. 6B] FIG. 6B is a diagram illustrating a synthesized bird's-eye view image that changes together with the backing of the vehicle as the prior art;
[FIG. 6C] FIG. 6C is a diagram illustrating a synthesized bird's-eye view image that changes together with the backing of the vehicle as the prior art;
[FIG. 6D] FIG. 6D is a diagram illustrating a synthesized bird's-eye view image that changes together with the backing of the vehicle as the prior art;
[FIG. 6E] FIG. 6E is a diagram illustrating a synthesized bird's-eye view image that changes together with the backing of the vehicle as the prior art;
[FIG. 6F] FIG. 6F is a diagram illustrating a synthesized bird's-eye view image that changes together with the backing of the vehicle as the prior art;
[FIG. 7A] FIG. 7A is a diagram illustrating a synthesized bird's-eye view image that changes together with the backing of the vehicle when a shadow is present as the prior art;
[FIG. 7B] FIG. 7B is a diagram illustrating a synthesized bird's-eye view image that changes together with the backing of the vehicle when a shadow is present as the prior art;
[FIG. 7C] FIG. 7C is a diagram illustrating a synthesized bird's-eye view image that changes together with the backing of the vehicle when a shadow is present as the prior art;
[FIG. 7D] FIG. 7D is a diagram illustrating a synthesized bird's-eye view image that changes together with the backing of the vehicle when a shadow is present as the prior art;
[FIG. 7E] FIG. 7E is a diagram illustrating a synthesized bird's-eye view image that changes together with the backing of the vehicle when a shadow is present as the prior art; and
[FIG. 7F] FIG. 7F is a diagram illustrating a synthesized bird's-eye view image that changes together with the backing of the vehicle when a shadow is present as the prior art.

### EMBODIMENTS FOR CARRYING OUT INVENTION

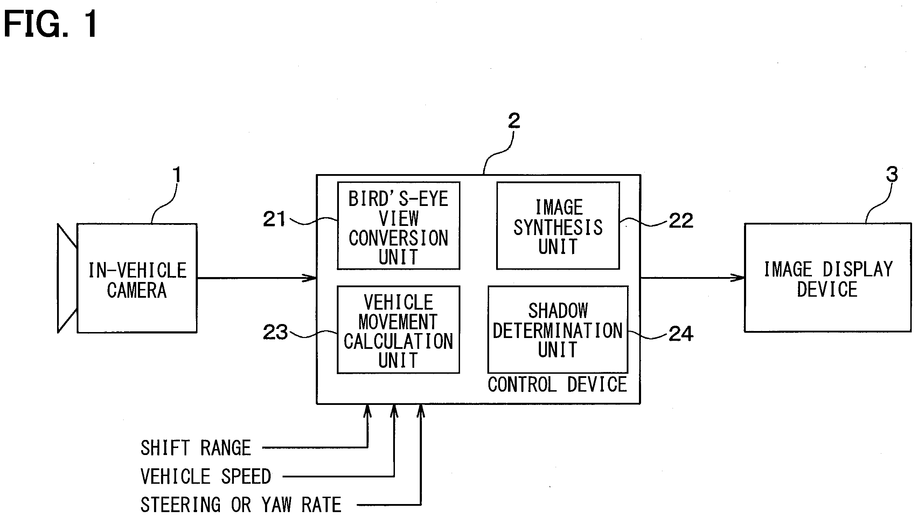

Hereinafter, a description will be given of an embodiment of the present invention. FIG. 1 is a diagram illustrating a configuration of a vehicle surrounding image display system according to this embodiment. The vehicle surrounding image display system is mounted in a vehicle, and includes an in-vehicle camera 1, a control device 2 (corresponding to an example of a vehicle surrounding image display control device), and an image display device 3.

The in-vehicle camera 1 is mounted fixedly to the vicinity of a rear end of the vehicle. The in-vehicle camera 1 photographs the surroundings of the vehicle, specifically, a predetermined area in the rear of the vehicle, repetitively (for example, in a cycle of 1/30 seconds), and sequentially outputs data of taken images obtained as a result of photographing to the control device 2.

The control device 2 repetitively receives the taken images from the in-vehicle camera 1. The control device 2 also repetitively receives information on a shift range, information on a vehicle speed, and information on a steering angle (or yaw rate) from the subject vehicle.

The control device 2 executes predetermined processing to function as a bird's-eye view conversion unit 21, an image synthesis unit 22, a vehicle movement calculation unit 23, and a shadow determination unit 24.

The bird's-eye view conversion unit 21 subjects the taken image received from the in-vehicle camera 1 to known bird's-eye view conversion to convert the taken image into a bird's-eye view image in a viewpoint of overlooking the subject vehicle from above (directly below or diagonally below).

As will be described later, the image synthesis unit 22 synthesizes a bird's-eye view image of a latest taken image, and a bird's-eye view image of a past taken image, and outputs a synthesized bird's-eye view image obtained as a result of the synthesis to the image display device 3.

The vehicle movement calculation unit 23 calculates the movement (the amount of movement and a variation in the posture) of the subject vehicle conforming to a known Ackerman model on the basis of information on a shift range, information on a vehicle speed, and information on a steering angle (or yaw rate) which are received from the subject vehicle. The shadow determination unit 24 determines whether a shadow is present in the bird's-eye view image of the latest taken image, or not.

The control device 2 configured as described above may be formed of a known microcomputer.

The image display device 3 is a device for displaying the synthesized bird's-eye view image input from the control device 2, and arranged at a position where a driver within the vehicle can watch the displayed synthesized bird's-eye view image.

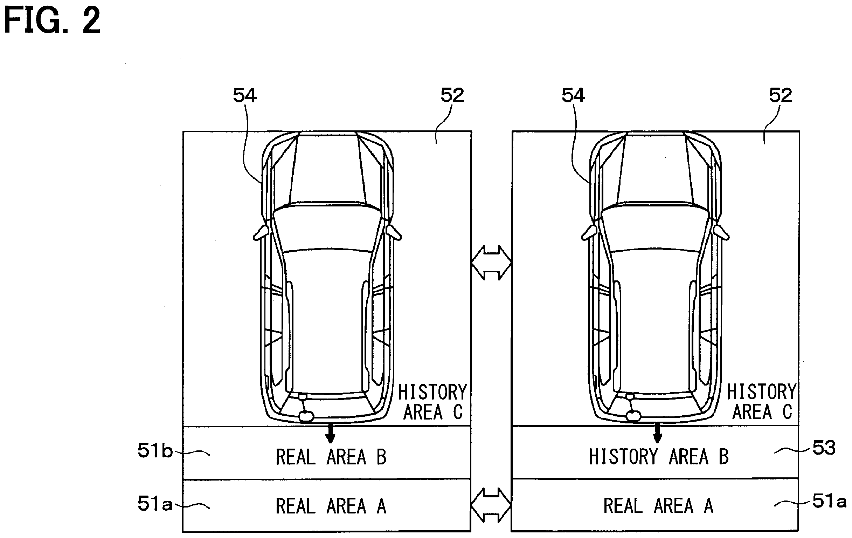

Hereinafter, a description will be given of the actuation of the vehicle surrounding image display system configured as described above. A writable memory (for example, RAM) installed in the control device 2 ensures a real area A 51a, a real area B 51b, a history area C 52, and a history area B 53 in advance, as illustrated in FIG. 2.

The real area A 51a and the real area B 51b are areas for storing the bird's-eye view image in the rear of the subject vehicle around the subject vehicle. As will be described later, a bird's-eye view image into which the latest taken image is subjected to bird's-eye view conversion is stored in the real area A 51a and the real area B 51b.

Also, the real area A 51a is an area for storing the bird's-eye view image in a predetermined area farther from the vehicle in two areas into which the rear of the vehicle is divided in a front-back direction of the vehicle. Likewise, the real area B 51b is an area for storing the bird's-eye view image in a predetermined area closer to the vehicle in the two divided areas.

The history area C 52 is an area for storing the bird's-eye view image in an area other than the rear of the subject vehicle (that is, outside of the taken area of the in-vehicle camera 1) around the subject vehicle. A bird's-eye view image into which the past taken image is subjected to bird's-eye view conversion is stored in the history area C 52 as will be described later.

The history area B 53 is an area for storing the bird's-eye view image in the same area as the real area B 51b around the vehicle. However, as will be described later, unlike the real area B 51b, not the latest taken image, but the bird's-eye view image into which the past taken image is subjected to the bird's-eye view conversion is stored in the history area B 53.

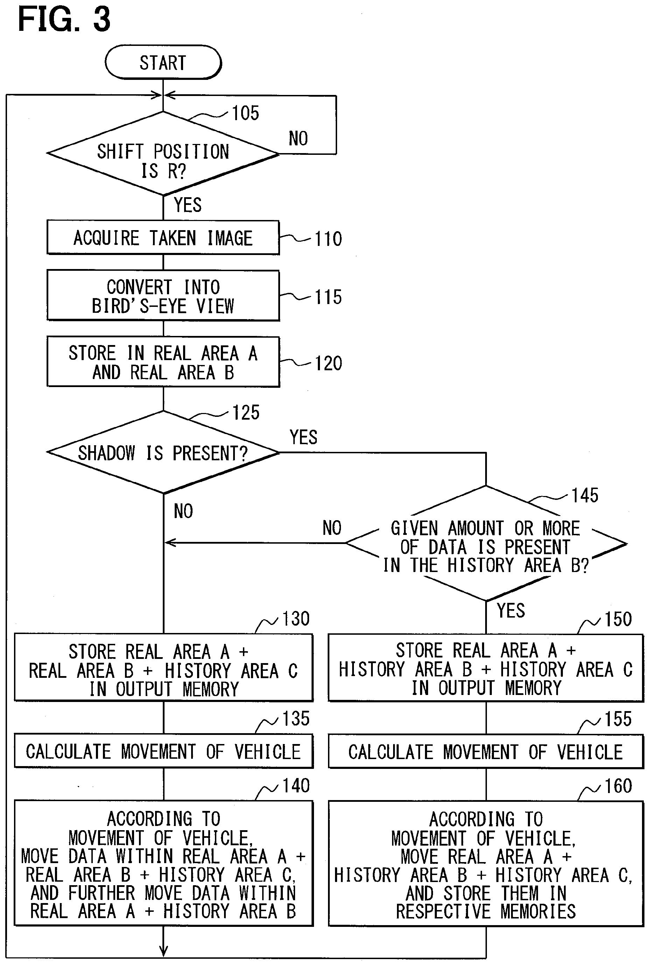

The control device 2 executes the processing illustrated in a flowchart of FIG. 3 with the use of the real area A 51a, the real area B 51b, the history area C 52, and the history area B 53. The control device 2 executes the processing of FIG. 3 to function as the bird's-eye view conversion unit 21, the image synthesis unit 22, the vehicle movement calculation unit 23, and the shadow determination unit 24.

The processing in FIG. 3 will be described along one case. In this case, it is assumed that shadows other than the shadow of the subject vehicle are not reflected on the taken image of the in-vehicle camera 1.

First, when the control device 2 starts the processing of FIG. 3, the respective areas of the real area A 51a, the real area B 51b, the history area C 52, and the history area B 53 are in an empty state where the bird's-eye view image data is not included at all, in other words, in a state where only data indicative of empty is included.

The control device 2 determines whether a shift position of the subject vehicle is a reverse (reverse position), or not, on the basis of the received latest shift range information first in Step 105. If the shift position is not the reverse, the control device 2 again executes the determination in Step 105.

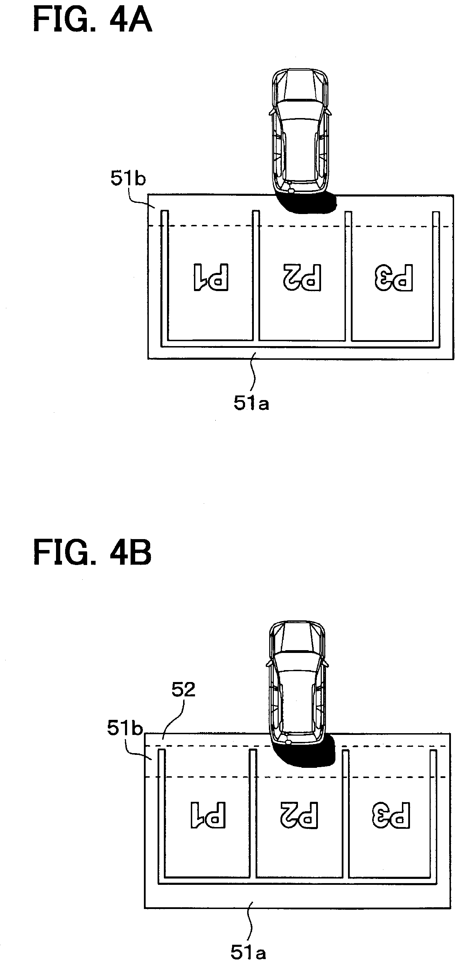

When the driver is to park the subject vehicle in a parking square (P2 in FIGS. 4A to 4F) of a parking area, it is assumed that the driver sets the shift range to R (reverse). Then, the control device 2 determines that the shift position is reverse in Step 105, and proceeds to Step 110.

In Step 110, the control device 2 acquires one latest taken image input from the in-vehicle camera 1. Then, in Step 115, the control device 2 subjects the latest taken image acquired in previous Step 110 to known bird's-eye view conversion. With the above bird's-eye view conversion, the taken image is converted into the bird's-eye view image in a viewpoint of overlooking the subject vehicle from information (directly below or diagonally below).

In the bird's-eye view conversion, it is assumed that an object in the taken image is present at a position where the height is zero (that is, road surface) as well known. A conversion expression used for the bird's-eye view conversion is recorded in a memory (for example, ROM) of the control device 2 in advance. The control device 2 executes the processing in Step 115 to function as the bird's-eye view conversion unit 21.

Then, the control device 2 stores the bird's-eye view image created in previous Step 115 in the real area A 51a and the real area B 51b in the memory in Step 120.

Specifically, the image in the predetermined area farther from the vehicle in the two images into which the bird's-eye view image is divided in the front-rear direction of the vehicle is stored in the real area A 51a, and the image in the predetermined area closer to the vehicle in the two areas into which the bird's-eye view image is divided likewise is stored in the real area B 51b.

Then, the control device 2 determines whether the shadow is present in the bird's-eye view image stored in the real area B 51b in the bird's-eye view images created in previous Step 115, or not, in Step 125.

Whether the shadow is present in the bird's-eye view image, or not, may be determined by a known method (for example, methods disclosed in PTL 2, and NPL 1). For example, the determination can be conducted through the shadow detection technique disclosed in PTL 2.

Specifically, a partial area of the bird's-eye view image within the real area B 51b is divided into plural areas on the basis of hue and brightness, and two areas in which a difference of hues therebetween is equal to or lower than a predetermined threshold, and a difference in the brightness therebetween is equal to or higher than a predetermined value are extracted from the divided plural areas.

One of the two extracted areas, which is higher in the brightness is set as a non-shaded area, and the other area lower in the brightness is set as a shaded area. A vector from the shaded area toward the non-shaded are in a space of color information (refer to FIG. 14(b) of PTL 2) is identified as color information on a light source.

An overall area of the bird's-eye view image within the real area B 51b is divided into plural areas on the basis of the hue and the brightness. If a difference in the hue between the adjacent areas matches a hue of a light source within a predetermined range, one of those adjacent areas which is lower in the brightness is identified as a shadow. The control device 2 executes the processing of Step 125 to function as the shadow determination unit 24.

In this case, it is assumed that at the time of starting the processing of FIG. 3, as illustrated in FIG. 4A, the shadow of the subject vehicle is present within an area corresponding to the real area B 51b in the rear (traveling direction) of the subject vehicle. In this case, if it is determined that the shadow is present in Step 125, the flow proceeds to Step 145.

It is determined whether at least a predetermined amount of bird's-eye view image data is present in the history area B 53, or not, in Step 145. For example, when the overall history area B 53 is filled with data of the bird's-eye view image, it may be determined that at least the predetermined amount of bird's-eye view image data is present in the history area B 53. In the other cases, it may be determined that the predetermined amount of bird's-eye view image data is not present in the history area B 53.

In this case, since the processing of FIG. 3 has just begun, the bird's-eye view image data is not present in the history area B 53 at all. Therefore, it is determined that the amount of bird's-eye view image data is lower than the predetermined amount, and the flow proceeds to Step 130.

In Step 130, in a layout illustrated on a left side of FIG. 2, the images of the real area A 51a, the real area B 51b, and the history area C 52 are joined together, and synthesized, and the synthesized bird's-eye view image after synthesizing is stored in a predetermined output memory in the control device 2.

As illustrated in FIG. 2, an image 54 indicative of a shape of the subject vehicle may overlap with the synthesized bird's-eye view image. In this situation, the vehicle shape image 54 may transparently overlap with the synthesized bird's-eye view image so that both of the synthesized bird's-eye view image and the vehicle shape image 54 are visible in a portion where the synthesized bird's-eye view image overlaps with the vehicle shape image 54.

The control device 2 executes the processing in Step 130 to function as the image synthesis unit 22. The synthesized bird's-eye view image stored in the output memory is input from the control device 2 to the image display device 3, as a result of which the image display device 3 displays the synthesized bird's-eye view image on a driver.

Then, the amount of movement (a movement vector and a posture change angle) of the subject vehicle conforming to the known Ackerman model is calculated on the basis of various vehicle behavior information input from the subject vehicle, that is, latest information (past information is additionally used) of information on a shift range, information on a vehicle speed, and information on a steering angle (or yaw rate) in Step 135. In the present specification, the amount of movement is the amount of movement indicative of the movement (that is, the amount of movement at acquisition intervals of the taken images) of the vehicle in a period from an acquisition timing of the previously taken image to an acquisition timing of the presently taken image. The control device 2 executes the processing in Step 135 to function as the vehicle movement calculation unit 23.

Subsequently, the amount of relative movement indicative of how the surroundings (assuming that the circumferences are fixed to a road surface) of the subject vehicle move relative to the subject vehicle is calculated in Step 140 on the basis of the amount of movement of the subject vehicle calculated in previous Step 135.

Specifically, the movement reverse to the amount of movement of the subject vehicle calculated in previous Step 135 is calculated. For example, when the movement vector of the subject vehicle is (α, β), and the posture change angle is θ, it is assumed that the amount of relative movement of the surroundings relative to the subject vehicle is (-α, -β) in the movement vector, and -θ in the posture change angle.

All of the bird's-eye view images stored within a joining area in which the real area A 51a, the real area B 51b, and a history area C 52c are joined together in a layout shown on a left side of FIG. 2 move within the joining area so that the bird's-eye view images within the joining area reflect the present surrounding layout of the vehicle according to the amount of relative movement of the surroundings calculated as described above.

With the above configuration, a part of the bird's-eye view images moves from the real area B 51b to the history area C 52, or from the history area C 52 to the real area B 51b in a boundary between the real area B 51b and the history area C 52 according to the amount of relative movement. In this case, since the subject vehicle is backed, the former case is applied. Also, an image of the shadow of the subject vehicle in the real area B 51b moves to the history area C 52.

At the same time, the bird's-eye view images move according to the amount of relative movement of the surroundings calculated as described above, within the area (attention is paid to a fact that the history area C 52 is not joined) in which the real area A 51a and the history area B 53 are joined together in the layout shown on a right side of FIG. 2, in Step 140. Therefore, the bird's-eye view images increase within the history area C 52 that has been empty at the time of beginning of the processing in FIG. 3 while the vehicle is backed.

With the above configuration, a part of the bird's-eye view images moves from the real area A 51a to the history area B 53, or from the history area B 53 to the real area A 51a in a boundary between the real area A 51a and the history area B 53 according to the amount of relative movement. In this case, since the subject vehicle is backed, the former case is applied. Therefore, the bird's-eye view images increase within the history area B 53 that has been empty at the time of beginning of the processing in FIG. 3 while the vehicle is backed.

After Step 140, the processing returns to Step 105. Thereafter, it is assumed that the backing of the vehicle is continued, and the shadow of the subject vehicle continues to be present within the latest taken image (within a position corresponding to the real area B 51b). In this case, while data of the bird's-eye view image in the history area B 53 does not satisfy a predetermined amount, the control device 2 determines that the shift position is reverse in Step 105, determines that the shadow is present in Step 125, and determines that the data of the bird's-eye view image does not reach the predetermined amount within the history area B 53 in Step 145.

Therefore, the control device 2 repetitively executes Steps 105, 110, 115, 120, 125, 145, 130, 135, and 140 in the stated order. The processing details in the respective steps are identical with those described above.

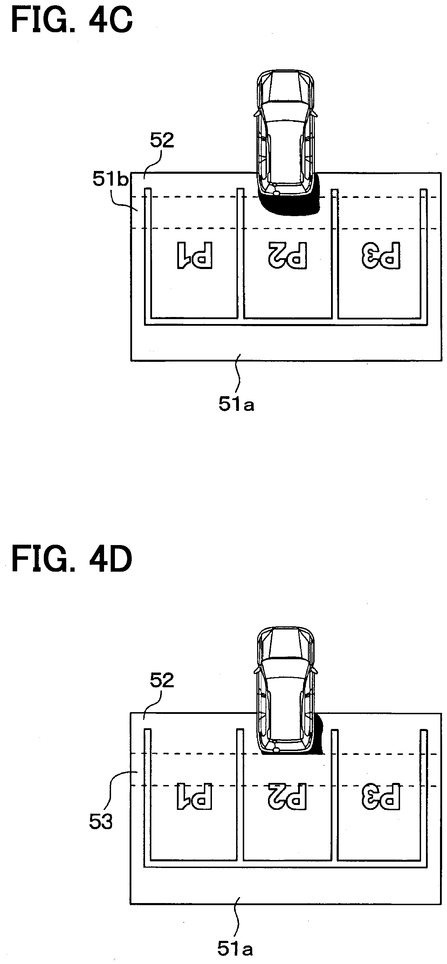

As a result, as illustrated in FIGS. 4A, 4B, and 4C, the bird's-eye view image within the real area B 51b is gradually accumulated within the history area C 52 according to the backing (directly backing or indirectly backing) of the vehicle. During this operation, as already described above, in Step 130, the synthesized bird's-eye view image (and an image 54 of the vehicle) in which the bird's-eye view images within the real area A 51a, the real area B 51b, and the history area C 52 are joined together is continuously displayed on the image display device 3.

Also, during this operation, since the shadow of the subject vehicle continues to be present in the bird's-eye view image in the real area B 51b, the bird's-eye view image having the shadow continues to be accumulated in the history area C 52. Therefore, as illustrated in FIGS. 4A, 4B, and 4C, the shadow that is really absent enlarges as the image within the history area C 52.

Also, as described above, the control device 2 repetitively executes Steps 105, 110, 115, 120, 125, 145, 130, 135, and 140 in the stated order, as a result of which the bird's-eye view images within the real area A 51a are gradually accumulated within the history area B 53 in conformity to the backing (directly backing or indirectly backing) of the vehicle. However, during this operation, the history area B 53 is not used for display on the image display device 3.

As compared with the real area B 51b, the real area A 51a stores the bird's-eye view image at a rear position (for example, rear position farther from a rear end of the subject vehicle by 3m or longer) farther from the rear end of the vehicle. Therefore, a possibility that the shadow of the subject vehicle is reflected on the bird's-eye view image in the real area A 51a is relatively low. In this case, it is assumed that the shadow of the subject vehicle is not reflected on the bird's-eye view image in the real area A 51a. Therefore, the shadow of the subject vehicle is not also reflected on the bird's-eye view image which moves from the real area A 51a, and is accumulated in the history area B 53.

Thereafter, the subject vehicle continues to back in a state where the shadow of the subject vehicle continues to be present within the latest taken image (within the position corresponding to the real area B 51b), as a result of which data of the bird's-eye view image in the history area B 53 becomes equal to or larger than the predetermined amount.

In this case, the control device 2 determines that the shift position is reverse in Step 105, determines that the shadow is present in Step 125, proceeds to Step 145, and determines that the data of the bird's-eye view image is equal to or higher than the predetermined amount within the history area B 53 in Step 145. Therefore, the control device 2 proceeds to Step 150.

In Step 150, in a layout illustrated on a right side of FIG. 2, the images of the real area A 51a, the history area B 53, and the history area C 52 are joined together, and synthesized, and the synthesized bird's-eye view image after synthesizing is stored in a predetermined output memory in the control device 2.

The processing in Step 150 is different from the processing in Step 130 in that the real area B 51b (the shadow is present) is replaced with the history area B 53 (the shadow is absent). The image 54 indicative of a shape of the subject vehicle may overlap with the synthesized bird's-eye view image as in Step 130.

As described above, the real area B 51b (the shadow is present) is replaced with the history area B 53 (the shadow is absent) for display, as a result of which as illustrated in FIG. 4D, the shadow that has been present in the bird's-eye view image up to now is eliminated in the rear of the subject vehicle. However, the shadow that has already moved to the history area C 52 is continuously displayed.

The control device 2 executes the processing in Step 150 to function as the image synthesis unit 22. The synthesized bird's-eye view image stored in the output memory is input from the control device 2 to the image display device 3, as a result of which the image display device 3 displays the synthesized bird's-eye view image on a driver.

Subsequently, in Step 155, the amount of movement (movement vector and posture change angle) of the subject vehicle conforming to the known Ackerman model is calculated in the same method as that in Step 130. The control device 2 executes the processing in Step 155 to function as the vehicle movement calculation unit 23. The control device 2 executes the processing in Step 155 to function as the vehicle movement calculation unit 23.

Subsequently, in Step 160, the amount of relative movement indicative of how the surroundings (assuming that the circumferences are fixed to a road surface) of the subject vehicle move relative to the subject vehicle is calculated on the basis of the amount of movement of the subject vehicle calculated in previous Step 155 in the same method as that in Step 140.

All of the bird's-eye view images stored within the joining area in which the real area A 51a, the history area B 53, and the history area C 52c are joined together in a layout shown on a right side of FIG. 2 move within the joining area so that the bird's-eye view images within the joining area are reflected on the present surrounding layout of the vehicle according to the amount of relative movement of the surroundings calculated as described above.

With the above configuration, a part of the bird's-eye view images moves from the real area A 51a to the history area B 53, or from the history area B 53 to the real area A 51a in a boundary between the real area A 51a and the history area B 53 according to the amount of relative movement. In this case, since the subject vehicle is backed, the former case is applied. Therefore, the bird's-eye view images increase within the history area B 53 that has been empty at the time of beginning of the processing in FIG. 3 while the vehicle is backed.

With the above configuration, a part of the bird's-eye view images moves from the history area B 53 to the history area C 52, or from the history area C 52 to the history area B 53 in a boundary between the history area B 53 and the history area C 52 according to the amount of relative movement. In this case, since the subject vehicle is backed, the former case is applied. In this case, since the shadow of the subject vehicle is absent in the real area B 51b, the image of the shadow of the subject vehicle does not move to the history area C 52.

After Step 160, the processing returns to Step 105. Thereafter, it is assumed that the backing of the vehicle is continued, and the shadow of the subject vehicle continues to be present within the latest taken image (within a position corresponding to the real area B 51b). In this case, the control device 2 determines that the shift position is reverse in Step 105, determines that the shadow is present in Step 125, and determines that the data of the bird's-eye view image is equal to or higher than the predetermined amount within the history area B 53 in Step 145.

Therefore, the control device 2 repetitively executes Steps 105, 110, 115, 120, 125, 145, 150, 155, and 160 in the stated order. The processing details in the respective steps are identical with those described above.

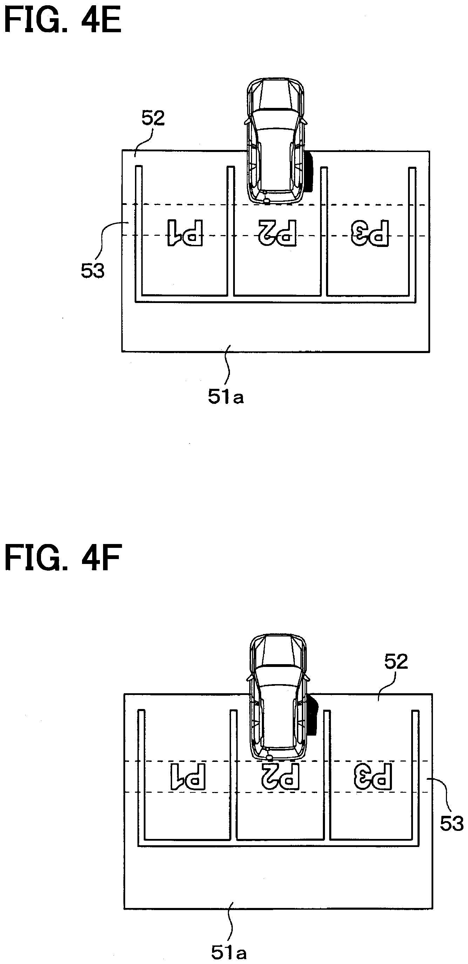

As a result, as illustrated in FIGS. 4D, 4E, and 4F, the bird's-eye view image within the real area A 51a is gradually accumulated within the history area B 53 according to the backing (directly backing or indirectly backing) of the vehicle. Also, the bird's-eye view image within the history area B 53 is gradually accumulated within the history area C 52.

During this operation, as already described above, in Step 150, the synthesized bird's-eye view image (and an image 54 of the vehicle) in which the bird's-eye view images within the real area A 51a, the history area B 53, and the history area C 52 are joined together is continuously displayed on the image display device 3.

Also, during this operation, since the shadow of the subject vehicle is absent in the bird's-eye view image in the history area B 53, the bird's-eye view image having no shadow continues to be accumulated in the history area C 52. Therefore, as illustrated in FIGS. 4D, 4E, and 4F, the shadow that has already moved remains in the history area C 52, and moves, but the shadow that is actually absent can be prevented from further enlarging within the history area C 52 as an image.

Thereafter, it is assumed that the shadow of the subject vehicle is vanished from the bird's-eye view image in the real area B 51b for a reason that the orientation of the vehicle changes. In this case, the control device 2 determines in Step 125 that the shadow is absent in the bird's-eye view image created in previous Step 115, and proceeds to Step 130. The processing details in Steps 130, 135, and 140 have already been described above. However, in this case, since the shadow of the subject vehicle is absent in the bird's-eye view image within the real area B 51b, the image of shadow does not move from the real area B 51b to the history area C 52 in Step 140.

Thereafter, while the vehicle is backing in a state where the shadow of the subject vehicle does not enter the bird's-eye view image in the real area B 51b, the control device 2 determines that the shadow is absent in Step 125, and therefore repeats the processing in Steps 105, 110, 120, 125, 130, 135, and 140. Similarly, in this case, since the shadow is absent in the bird's-eye view image within the real area B 51b, the image of shadow does not move from the real area B 51b to the history area C 52.

In this way, when the shadow is absent in the bird's-eye view image within the real area B 51b, the bird's-eye view image within not history area B 53 but the real area B 51b is used for display whereby the displayed area enlarges with the use of the latest taken image.

In the above case, the shadow of the subject vehicle has already entered the taken image at the time of starting the processing in FIG. 3. However, the shadow of the subject vehicle does not enter the taken image at the time of starting the processing in FIG. 3, and a case in which the shadow of the subject vehicle appears within the taken image is conceivable for a reason that the orientation of the vehicle changes later.

In the above case, while the vehicle is backing in a state where the shadow of the subject vehicle does not enter the bird's-eye view image in the real area B 51b, the control device 2 determines that the shadow is absent in Step 125, and therefore repeats the processing in Steps 105, 110, 120, 125, 130, 135, and 140. In this case, since the shadow is absent in the bird's-eye view image within the real area B 51b, the image of shadow does not move from the real area B 51b to the history area C 52. Also, in this case, the bird's-eye view image is gradually accumulated in the history area B 53 from the real area A 51a with the backing of the vehicle in Step 140.

Thereafter, it is assumed that data of the bird's-eye view image is accumulated in the history area B 53 by a predetermined amount or larger, and then the shadow of the subject vehicle appears within the bird's-eye view image in the real area B 51b for a reason that the orientation of the vehicle changes. In this case, the control device 2 determines that the shadow is present in Step 125, determines that the data of the bird's-eye view image is present within the history area B 53 by the predetermined amount or larger in Step 145, proceeds to Step 150 and executes the processing in Steps 150, 155, and 160 in the same manner as that already described above.

However, in this case, since an image of the shadow does not move to the history area C 52 at all, no shadow is present at all in the synthesized image in which the bird's-eye view images within the real area A 51a, the history area B 53, and the history area C 52 are joined together.

Thereafter, even if the shadow is present in the taken image (specifically, taken image in an area corresponding to the real area B 51b), the control device 2 repetitively executes Steps 105, 110, 115, 120, 125, 145, 150, 155, and 160 in the stated order to use the taken image within the history area B 53 without use of the latest taken image within the real area B 51b. As a result, no shadow is present at all in the synthesized image in which the bird's-eye view images are joined together within the real area A 51a, the history area B 53, and the history area C 52.

In this embodiment, it is determined whether the shadow is present in the bird's-eye view image within the real area B 51b created in previous Step 115, or not, in Step 125. However, it is not determined whether the shadow is a shadow of the subject vehicle, or a shadow of another object.

Therefore, as one case, even if the shadow of another object is present in the bird's-eye view image within the latest real area B 51b although the shadow of the subject vehicle is absent in the bird's-eye view image, the control device 2 conducts the same operation as that when the shadow of the subject vehicle is present in the bird's-eye view image within the latest real area B 51b.

That is, it is determined that the shadow is present in Step 125. If at least the predetermined amount of bird's-eye view image data is accumulated in the history area B 53, the real area B 51b is replaced with the history area B 53, and the synthesized bird's-eye view image combined in the layout on the right side of FIG. 2 is displayed. The synthesized bird's-eye view image moves into the real area A 51a, the history area B 53, and the history area C 52 together with the movement of the vehicle.

Even in this case, since a part of the displayed bird's-eye view image is merely replaced with a slightly older bird's-eye view image within the history area B 53 from the latest bird's-eye view image within the real area B 51b, there arises no severe problem. Also, even if something that is not a shadow is falsely determined as the shadow, there arises no severe problem likewise.

As described above, in this embodiment, with the execution of Steps 150 to 160, even when the shadow of the subject vehicle is photographed by the in-vehicle camera 1, the quality of the synthesized bird's-eye view image displayed on the image display device 3 can be inhibited from being degraded.

Specifically, the history area B 53 is provided, the bird's-eye view image is configured within the history area B 53 with the use of the bird's-eye view image stored within the real area A 51a so that the bird's-eye view image within the history area B 53 reflects the present surrounding layout of the vehicle.

It is determined whether the shadow is present within the bird's-eye view image stored in a predetermined area including a part or all of the real area B 51b, or not. The bird's-eye view image is configured within the history area C 52 with the use of the bird's-eye view image stored in the real area B 51b if the shadow is absent, and the bird's-eye view image is configured within the history area C 52 with the use of the bird's-eye view image stored in the history area B 53 if the shadow is present, so that the bird's-eye view image within the history area C 52 reflects the present surrounding layout of the vehicle.

In this way, whether the bird's-eye view image in the real area B 51b, or the history bird's-eye view image in the history area B 53 is used as an original image of a history synthesis (configuring the bird's-eye view image within the history area C 52 in this example) can be selected according to presence or absence of the shadow.

With the above configuration, if a shadow is present, since the history synthesis is conducted with the use of the bird's-eye view image in the history area B 53 configured on the basis of the bird's-eye view image (image high in a possibility that the shadow is absent) in the real area A 51a, a possibility that the shadow of the subject vehicle enlarges within the history area C 52 can be reduced.

Also, if the shadow is absent, since the history synthesis is conducted with the use of the bird's-eye view image in the real area B 51b, a timing of taking the bird's-eye view image C within the history area C 52 becomes relatively new.

In this embodiment, even if it is determined that the shadow is present in Step 125, when it is determined that at least the predetermined amount of data is absent in the history area B 53 in Step 145, the history area B 53 is not used for display and the bird's-eye view image movement to the history area C 52 in Steps 150 to 160, but the real area B 51b is used for display and the bird's-eye view image movement to the history area C 52 in Steps 130 to 140.

This is because even if the shadow is present in the bird's-eye view image of the real area B 51b, if the history area B 53 is used for display in a stage where a sufficient amount of bird's-eye view image is not accumulated in the history area B 53, a blank is generated in the synthesized bird's-eye view image displayed on the image display device 3, and the blank also moves to the history area C 52.

In the above embodiment, the control device 2 executes Step 110 to function as an example of the acquisition device, executes Step 115 to function as an example of the bird's-eye view conversion device, executes Step 120 to function as an example of the division storage device, executes Step 125 to function as an example of the shadow determination device, and executes Steps 135 and 155 to function as an example of the movement calculation device. Also, the control device 2 executes Steps 130 and 150 to function as an example of the display control device, executes Step 130 to function as an example of the first display control device, executes Step 140 to function as an example of the first history image configuration device, executes Step 150 to function as an example of the second display control device, executes Step 160 to function as an example of the second history image configuration device, and executes Step 145 to function as an example of the data amount determination device.

### (Other embodiments)

The embodiments of the present invention have been described above. However, the scope of the present invention is not limited to only the above embodiments, but encompasses various configurations that can realize the functions of the respective subject matters of the present invention. For example, the present invention includes the following configurations.
(1) Step 145 may be replaced with the determination of whether the vehicle travels back by a predetermined distance or more, or not, (or travels back by a predetermined time or more, or not). This is operation based on an idea that if the vehicle travels back by a sufficient distance, a sufficient amount of bird's-eye view conversion data should be included in the history area B 53.
(2) In Step 125 of the above embodiment, it is not determined whether the shadow is caused by the subject vehicle, or not, but it is determined that the shadow is present within the real area B 51b even if the shadow is caused by an object other than the subject vehicle if the shadow is present in the real area B 51b.
   However, the present invention is not always limited to the above configuration. Only when a shadow is present in the real area B 51b, and the shadow is a shadow caused by the subject vehicle, it may be determined that the shadow is present. In the other cases, it may be determined that the shadow is absent.
(3) Also, in the above embodiment, the area for determining whether the shadow is present, or not is intended for only the bird's-eye view image within the overall real area B 51b, but may be intended for only the bird's-eye view image within a total area of the overall real area A 51a, and the real area B 51b. Alternatively, the determination area may be intended for only the bird's-eye view image within a total area of a part of the real area A 51a and a part of the real area B 51b. Alternatively, the determination area may be intended for the overall taken image of the in-vehicle camera 1.
   That is, in the bird's-eye view image stored in a predetermined area including a part of the real area B 51b, it may be determined whether the shadow is present, or not. This is because with the above configuration, if the shadow is present in at least the part of the real area B 51b, the displayed shadow amount can be reduced by execution of Steps 150 to 160. If the shadow is absent in the real area B 51b, but the shadow is present in the other portion in a determination target, Steps 150 to 160 may be executed. Even in this case, since the image to be displayed is merely eliminated by updating, there arises no severe problem.
(4) In the above respective embodiments, the in-vehicle camera 1 repetitively photographs the predetermined area in the rear of the vehicle. Alternatively, the in-vehicle camera 1 may repetitively photograph a predetermined area in front of the vehicle. In this case, in the present specification, the front and rear of the vehicle are read while being replaced with each other.
(5) Also, in the above embodiment, in Step 140, the bird's-eye view image moves within the joining area in which the real area A 51a, the real area B 51b, and the history area C 52c are joined together on the basis of the amount of movement of the vehicle. At the same time, the bird's-eye view image moves within the joining area in which the history area B 53 and the real area A 51a are joined together.
   With the above configuration, the bird's-eye view image at the respective positions within the history area C 52 is a bird's-eye view image just before departing from the photographing area of the in-vehicle camera 1 (just before departing from the real area B 51b) at that position. However, the configuration may not be always limited to the above configuration.
   For example, the bird's-eye view image at the respective positions within the history area C 52 may be a bird's-eye view image before further than just before departing from the photographing area of the in-vehicle camera 1 at that position.
   That is, it is sufficient if the history area C 52 is configured with the use of the bird's-eye view image stored within the real area B 51b on the basis of the amount of movement of the vehicle so that the bird's-eye view image within the history area C 52 reflects the present surrounding layout of the vehicle in Step 140.
(6) Also, in the above embodiment, in Step 160, the bird's-eye view image moves within the joining area in which the real area A 51a, the history area B 53, and the history area C 52c are joined together on the basis of the amount of movement of the vehicle.
   With the above configuration, the bird's-eye view image at the respective positions within the history area C 52 is a bird's-eye view image just before departing from the history area B 53 at that position. However, the configuration may not be always limited to the above configuration.
   For example, the bird's-eye view image at the respective positions within the history area C 52 may be a bird's-eye view image before further than just before departing from the history area B 53 at that position.
   That is, it is sufficient if the history area C 52 is configured with the use of the bird's-eye view image stored within the history area B 53 on the basis of the amount of movement of the vehicle so that the bird's-eye view image within the history area C 52 reflects the present surrounding layout of the vehicle in Step 160.
(7) Also, in the above embodiment, the bird's-eye view image moves within the joining area in which the real area A 51a, and the history area B 53 are joined together on the basis of the amount of movement of the vehicle in Step 140.
   Also, the bird's-eye view image moves within the joining area in which the real area A 51a, the history area B 53, and the history area C 52c are joined together on the basis of the amount of movement of the vehicle in Step 160.
   With the above configuration, the bird's-eye view image at the respective positions within the history area B 53 is a bird's-eye view image just before departing from the real area A 51a at that position. However, the configuration may not be always limited to the above configuration. For example, the bird's-eye view image at the respective positions within the history area B 53 may be a bird's-eye view image before further than just before departing from the real area A 51a at that position.
   That is, it is sufficient if the bird's-eye view image within the history area B 53 is configured with the use of the bird's-eye view image stored within the real area A 51a on the basis of the amount of movement of the vehicle so that the bird's-eye view image within the history area B 53 reflects the present surrounding layout of the vehicle.
(8) Also, in the above embodiment, with the provision of the history area B 53, the following two advantages (a) and (b) can be obtained. (a) Since display is conducted with the use of the history area B 53, a possibility that the shadow haunts in the rear of the subject vehicle when the subject vehicle travels is reduced, (b) Since the image moves to the history area C 52 from the history area B 53, a possibility that the shadow of the subject vehicle enlarges in the history area C 52 is reduced.

However, the advantage of (a) is not essential. That is, in the processing of FIG. 3, as in Step 130, the synthesized image of the bird's-eye view images within the real area A 51a, the real area B 51b, and the history area C 52 may be stored in the output memory in Step 150.

While the present disclosure has been described with reference to embodiments thereof, it is to be understood that the disclosure is not limited to the embodiments and constructions. The present disclosure is intended to cover various modification and equivalent arrangements. In addition, while the various combinations and configurations, other combinations and configurations, including more, less or only a single element, are also within the scope of the present disclosure.

## Claims

1. A vehicle surrounding image display control device comprising:
an acquisition device (110) that repetitively acquires an image around a vehicle from an in-vehicle camera (1) mounted in the vehicle;
a bird's-eye view conversion device (115) that sequentially executes a bird's-eye view conversion of the taken image and creates a bird's-eye view image;
a division storage device (120) that divides the bird's-eye view image along a front-back direction of the vehicle to create a A bird's-eye view image in a predetermined A area farther from the vehicle and a B bird's-eye view image in a predetermined B area closer to the vehicle, stores the A bird's-eye view image in a real area A (51a) of a memory, and stores the B bird's-eye view image in a real area B (51b) of the memory,
said vehicle surrounding image display control device being **characterized in that** it further includes:
a shadow determination device (125) that determines whether a shadow is present in the B bird's-eye view image stored in a part or all of the B real area (51b);
a movement calculation device (135, 155) that calculates an amount of movement of the vehicle based on vehicle behavior information input from the vehicle;
a first history image configuration device (140) that:
configures a C bird's-eye view image in a C history area (52) of the memory using the B bird's-eye view image stored in the B real area (51b) according to the amount of movement of the vehicle so that the C bird's-eye view image in the C history area (52) of the memory for storing a bird's-eye view image in an C area outside of a photographing area of the in-vehicle camera (1) reflects a present surrounding layout of the vehicle; and
configures a B history bird's-eye view image in a B history area (53) using the A bird's-eye view image stored in the A real area (51a) according to the amount of movement of the vehicle so that the B bird's-eye view image in the B history area (53) of the memory for storing a bird's-eye view image in a same area as the B real area (51b) reflects the present surrounding layout of the vehicle,
when the shadow determination device (125) determines that the shadow is not present in the B bird's-eye view image;
a second history image configuration device (160) that:
configures the C bird's-eye view image in the C history area (52) using the B history bird's-eye view image stored in the B history area (53) according to the amount of movement of the vehicle so that the C bird's-eye view image in the C history area (52) of the memory reflects the present surrounding layout of the vehicle; and
configures the B history bird's-eye view image in the B history area (53) using the A bird's-eye view image stored in the A real area (51a) according to the amount of movement of the vehicle so that the B bird's-eye view image in the B history area (53) reflects the present surrounding layout of the vehicle,
when the shadow determination device (125) determines that the shadow is present in the B bird's-eye view image; and
a display control device (130, 150) that controls the image display device (3) to display the A bird's-eye view image in the A real area (51a), the C bird's-eye view image in the C history area (52), and the B bird's-eye view image in the B real area (51b) or the B history bird's-eye view image in the B history area (53).

2. The vehicle surrounding image display control device according to claim 1, further comprising:
a first display control device (130) that controls the image display device (3) to display the A bird's-eye view image in the A real area (51a), the B bird's-eye view image in the B real area (51b), and the C bird's-eye view image in the C history area (52) when the shadow determination device (125) determines that the shadow is not present in the B bird's-eye view image; and
a second display control device (150) that controls the image display device (3) to display the A bird's-eye view image in the A real area (51a), the B history bird's-eye view image in the B history area (53), and the C bird's-eye view image in the C history area (52) when the shadow determination device (125) determines that the shadow is present in the B bird's-eye view image.

3. The vehicle surrounding image display control device according to claim 1 or 2, further comprising:
a data amount determination device (145) that determines whether at least a predetermined amount of B history bird's-eye view image data is present in the B history area (53),
wherein the first history image configuration device (140):
configures the C bird's-eye view image in the C history area (52) using the B bird's-eye view image stored in the B real area (51b) according to the amount of movement of the vehicle so that the C bird's-eye view image in the C history area (52) reflects the present surrounding layout of the vehicle; and
configures the B history bird's-eye view image in the B history area (53) using the A bird's-eye view image stored in the A real area (51a) according to the amount of movement of the vehicle so that the B bird's-eye view image in the B history area (53) reflects the present surrounding layout of the vehicle,
when the shadow determination device (125) determines that the shadow is not present in the B bird's-eye view image, or when the shadow determination device (125) determines that the shadow is present in the B bird's-eye view image, and the data amount determination device (145) determines that an amount of B history bird's-eye view image data is not equal to or larger than a predetermined amount, and
wherein the second history image configuration device (160):
configures the C bird's-eye view image in the C history area (52) using the B history bird's-eye view image stored in the B history area (53) according to the amount of movement of the vehicle so that the C bird's-eye view image in the C history area (52) reflects the present surrounding layout of the vehicle; and
configures the B history bird's-eye view image in the B history area (53) using the A bird's-eye view image stored in the A real area (51a) according to the amount of movement of the vehicle so that the B history bird's-eye view image in the B history area (53) reflects the present surrounding layout of the vehicle,
when the shadow determination device (125) determines that the shadow is present in the B bird's-eye view image, and the data amount determination device (145) determines that an amount of B history bird's-eye view image data is equal to or larger than a predetermined amount.

4. The vehicle surrounding image display control device according to any one of claims 1 to 3,
wherein the first history image configuration device (140):
sequentially updates the A real area (51a), the B real area (51b), and the C history area (52) so that the bird's-eye view image moves in a joining area that joins an A area, which is a display area of the A bird's-eye view image, an B area, which is a display area of the B bird's-eye view image, and an C area, which is a display area of the C bird's-eye view image, according to the amount of movement of the vehicle; and
sequentially updates the B history area (53) and the A real area (51a) so that the bird's-eye view image moves in a joining area that joins a B area, which is a display area of the B history bird's-eye view image, and an A area, which is a display area of the A bird's-eye view image,
when the shadow determination device (125) determines that the shadow is not present in the B bird's-eye view image, and
wherein the second history image configuration device (160):
sequentially updates the A real area (51a), the B history area (53), and the C history area (52) so that the bird's-eye view image moves in a joining area that joins an A area, which is a display area of the A bird's-eye view image, a B area, which is a display area of the B history bird's-eye view image, and a C area, which is a display area of the C bird's-eye view image, according to the amount of movement of the vehicle,
when the shadow determination device (125) determines that the shadow is present in the B bird's-eye view image.

5. A vehicle surrounding image display method comprising:
repetitively acquiring an image around a vehicle from an in-vehicle camera (1) mounted in a vehicle;
sequentially executing a bird's-eye view conversion of the taken image to create a bird's-eye view image;
dividing the bird's-eye view image along a front-back direction of the vehicle to create a A bird's-eye view image in a predetermined A area farther from the vehicle, and a B bird's-eye view image in a predetermined B area closer to the vehicle, storing the A bird's-eye view image in a A real area (51a) of a memory, and storing the B bird's-eye view image in a B real area (51b) of the memory;
determining whether a shadow is present in the bird's-eye view image stored in a part or all of the B real area (51b);
calculating an amount of movement of the vehicle based on vehicle behavior information input from the vehicle;
configuring a C bird's-eye view image in a C history area (52) using the B bird's-eye view image stored in the B real area (51b) according to the amount of movement of the vehicle so that the C bird's-eye view image in the C history area (52) of the memory for storing a bird's-eye view image in an C area outside of a photographing area of the in-vehicle camera (1) reflects a present surrounding layout of the vehicle, and configuring a B history bird's-eye view image in the B history area (53) using the A bird's-eye view image stored in the A real area (51a) according to the amount of movement of the vehicle so that the B history bird's-eye view image in the B history area (53) of the memory for storing a bird's-eye view image in a same area as the B real area (51b) reflects the present surrounding layout of the vehicle, when the shadow is not present in the B bird's-eye view image;
configuring the C bird's-eye view image in the C history area (52) using the B history bird's-eye view image stored in the B history area (53) according to the amount of movement of the vehicle so that the C bird's-eye view image in the C history area (52) of the memory reflects a present surrounding layout of the vehicle, and configuring the B history bird's-eye view image in the B history area (53) using the A bird's-eye view image stored in the A real area (51a) according to the amount of movement of the vehicle so that the B history bird's-eye view image in the B history area (53) reflects the present surrounding layout of the vehicle, when the shadow is present in the B bird's-eye view image; and
controlling the image display device (3) to display the A bird's-eye view image in the A real area (51a), the C bird's-eye view image in the C history area (52), and the B bird's-eye view image in the B real area (51b) or the B history bird's-eye view image in the B history area (53).

6. A non-transitory tangible computer-readable medium comprising instructions being executed by a computer, the instructions including a computer-implemented method for controlling to display a vehicle surrounding image, the instructions including:
repetitively acquiring an image around a vehicle from an in-vehicle camera (1) mounted in a vehicle;
sequentially executing a bird's-eye view conversion of the taken image to create a bird's-eye view image;
dividing the bird's-eye view image along a front-back direction of the vehicle to create a A bird's-eye view image in a predetermined A area farther from the vehicle, and a B bird's-eye view image in a predetermined B area closer to the vehicle, storing the A bird's-eye view image in a A real area (51a) of a memory, and storing the B bird's-eye view image in a B real area (51b) of the memory;
determining whether a shadow is present in the bird's-eye view image stored in a part or all of the B real area (51b);
calculating an amount of movement of the vehicle based on vehicle behavior information input from the vehicle;
configuring a C bird's-eye view image in a C history area (52) using the B bird's-eye view image stored in the B real area (51b) according to the amount of movement of the vehicle so that the C bird's-eye view image in the C history area (52) of the memory for storing a bird's-eye view image in an C area outside of a photographing area of the in-vehicle camera (1) reflects a present surrounding layout of the vehicle, and configuring a B history bird's-eye view image in the B history area (53) using the A bird's-eye view image stored in the A real area (51a) according to the amount of movement of the vehicle so that the B history bird's-eye view image in the B history area (53) of the memory for storing a bird's-eye view image in a same area as the B real area (51b) reflects the present surrounding layout of the vehicle, when the shadow is not present in the B bird's-eye view image;
configuring the C bird's-eye view image in the C history area (52) using the B history bird's-eye view image stored in the B history area (53) according to the amount of movement of the vehicle so that the C bird's-eye view image in the C history area (52) of the memory reflects the present surrounding layout of the vehicle, and configuring the B history bird's-eye view image in the B history area (53) using the A bird's-eye view image stored in the A real area (51a) according to the amount of movement of the vehicle so that the B history bird's-eye view image in the B history area (53) reflects the present surrounding layout of the vehicle, when the shadow is present in the B bird's-eye view image; and
controlling the image display device (3) to display the A bird's-eye view image in the A real area (51a), the C bird's-eye view image in the C history area (52), and the B bird's-eye view image in the B real area (51b) or the B history bird's-eye view image in the B history area (53).

## Patentansprüche

1. Vorrichtung zur Steuerung der Anzeige von Bildern einer Fahrzeugumgebung, die aufweist:
eine Erfassungsvorrichtung (110), die von einer in dem Fahrzeug montierten Kamera (1) wiederholt ein Bild um ein Fahrzeug herum erfasst;
eine Vogelperspektivenumwandlungsvorrichtung (115), die nacheinander eine Vogelperspektivenumwandlung des aufgenommenen Bilds durchführt und das Vogelperspektivbild erzeugt;
eine Teilungsspeichervorrichtung (120), die das Vogelperspektivbild entlang einer Vorn-Hintenrichtung des Fahrzeugs teilt, um ein A-Vogelperspektivbild in einem vorgegebenen A-Bereich weiter von dem Fahrzeug weg und ein B-Vogelperspektivbild in einem vorgegebenen B-Bereich näher an dem Fahrzeug zu erzeugen, das A-Vogelperspektivbild in einem realen A-Bereich (51a) eines Speichers speichert und das B-Vogelperspektivbild in einem realen B-Bereich (51b) des Speichers speichert,
wobei die Vorrichtung zur Steuerung der Anzeige von Bildern einer Fahrzeugumgebung **dadurch gekennzeichnet ist, dass** sie ferner aufweist:
eine Schattenbestimmungsvorrichtung (125), die bestimmt, ob in dem B-Vogelperspektivbild, das in einem Teil oder dem gesamten realen B-Bereich (51b) gespeichert ist, ein Schatten vorhanden ist;
eine Bewegungsberechnungsvorrichtung (135, 155), die eine Bewegungsgröße des Fahrzeugs basierend auf Fahrzeugverhaltensinformationen, die von dem Fahrzeug eingegeben werden, berechnet;
eine erste Historien-Bildkonfigurationsvorrichtung (140), die:
ein C-Vogelperspektivbild in einem C-Historienbereich (52) des Speichers unter Verwendung des B-Vogelperspektivbilds, das in dem realen B-Bereich (51b) gespeichert ist, entsprechend der Bewegungsgröße des Fahrzeugs konfiguriert, so dass das C-Vogelperspektivbild in dem C-Historienbereich (52) des Speichers zum Speichern eines Vogelperspektivbilds in einem C-Bereich außerhalb eines Fotografierbereichs der Kamera (1) im Fahrzeug eine Umgebungsanordnung des Fahrzeugs widerspiegelt; und
ein B-Historien-Vogelperspektivbild in einem B-Historienbereich (53) unter Verwendung eines A-Vogelperspektivbilds, das in dem realen A-Bereich (51a) gespeichert ist, entsprechend der Bewegungsgröße des Fahrzeugs konfiguriert, so dass das B-Vogelperspektivbild in dem B-Historienbereich (53) des Speichers zum Speichern eines Vogelperspektivbilds in einem gleichen Bereich wie dem realen B-Bereich (51b) die aktuelle Umgebungsanordnung des Fahrzeugs widerspiegelt,
wenn die Schattenbestimmungsvorrichtung (125) bestimmt, dass der Schatten in dem B-Vogelperspektivbild nicht vorhanden ist;
eine zweite Historien-Bildkonfigurationsvorrichtung (160), die:
das C-Vogelperspektivbild in dem C-Historienbereich (52) unter Verwendung des B-Vogelperspektivbilds, das in dem B-Historienbereich (53) gespeichert ist, entsprechend der Bewegungsgröße des Fahrzeugs konfiguriert, so dass das C-Vogelperspektivbild in dem C-Historienbereich (52) des Speichers die aktuelle Umgebungsanordnung des Fahrzeugs widerspiegelt; und
das B-Historien-Vogelperspektivbild in dem B-Historienbereich (53) unter Verwendung des A-Vogelperspektivbilds, das in dem realen A-Bereich (51a) gespeichert ist, entsprechend der Bewegungsgröße des Fahrzeugs konfiguriert, so dass das B-Vogelperspektivbild in dem B-Historienbereich (53) die aktuelle Umgebungsanordnung des Fahrzeugs widerspiegelt;
wenn die Schattenbestimmungsvorrichtung (125) bestimmt, dass der Schatten in dem B-Vogelperspektivansicht vorhanden ist; und
eine Anzeigesteuervorrichtung (130, 150), die die Bildanzeigevorrichtung (3) steuert, um das A-Vogelperspektivbild in dem realen A-Bereich (51a), das C-Vogelperspektivbild in dem C-Historienbereich (25) und das B-Vogelperspektivbild in dem realen B-Bereich (51b) oder das B-Vogelperspektivbild in dem B-Historienbereich (53) anzuzeigen.

2. Vorrichtung zur Steuerung der Anzeige von Bildern einer Fahrzeugumgebung nach Anspruch 1, die ferner aufweist:
eine erste Anzeigesteuervorrichtung (130), welche die Bildanzeigevorrichtung (3) steuert, um das A-Vogelperspektivbild in dem realen A-Bereich (51a), das B-Vogelperspektivbild in dem realen B-Bereich (51b) und das C-Vogelperspektivbild in dem C-Historienbereich (52) anzuzeigen, wenn die Schattenbestimmungsvorrichtung (125) bestimmt, dass der Schatten in dem B-Vogelperspektivbild nicht vorhanden ist; und
eine zweite Anzeigesteuervorrichtung (150), welche die Bildanzeigevorrichtung (3) steuert, um das A-Vogelperspektivbild in dem realen A-Bereich (51a), das B-Historien-Vogelperspektivbild in dem B-Historienbereich und das C-Vogelperspektivbild in dem C-Historienbereich (52) anzuzeigen, wenn die Schattenbestimmungsvorrichtung (125) bestimmt, dass der Schatten in dem B-Vogelperspektivbild vorhanden ist.

3. Vorrichtung zur Steuerung der Anzeige von Bildern einer Fahrzeugumgebung nach Anspruch 1 oder 2, die ferner aufweist:
eine Datenmengenbestimmungsvorrichtung (145), die bestimmt, ob wenigstens eine vorgegebene Menge von B-Vogelperspektivbilddaten in dem B-Historienbereich (53) vorhanden sind,
wobei die erste Historienbildkonfigurationsvorrichtung (140):
das C-Vogelperspektivbild in dem C-Historienbereich (52) unter Verwendung des B-Vogelperspektivbilds, das in dem realen B-Bereich (51b) gespeichert ist, entsprechend der Bewegungsgröße des Fahrzeugs konfiguriert, so dass das C-Vogelperspektivbild in dem C-Historienbereich (52) die aktuelle Umgebung des Fahrzeugs widerspiegelt; und
das B-Vogelperspektivbild in dem B-Historienbereich (53) unter Verwendung des A-Vogelperspektivbilds, das in dem realen A-Bereich (51a) gespeichert ist, entsprechend der Bewegungsgröße des Fahrzeugs konfiguriert, so dass das B-Vogelperspektivbild in dem B-Historienbereich (53) die aktuelle Umgebung des Fahrzeugs widerspiegelt,
wenn die Schattenbestimmungsvorrichtung (125) bestimmt, dass der Schatten in dem B-Vogelperspektivbild nicht vorhanden ist, oder wenn die Schattenbestimmungsvorrichtung (125) bestimmt, dass der Schatten in dem B-Vogelperspektivbild vorhanden ist, und die Datenmengenbestimmungsvorrichtung (145) bestimmt, dass eine Menge von B-Historien-Vogelperspektivbilddaten nicht größer oder gleich einer vorgegebenen Menge ist, und
wobei die zweite Historienbildkonfigurationsvorrichtung (160):
das C-Vogelperspektivbild in dem C-Historienbereich (52) unter Verwendung des B-Historien-Vogelperspektivbilds, das in dem B-Historienbereich (53) gespeichert ist, entsprechend der Bewegungsgröße des Fahrzeugs konfiguriert, so dass das C-Vogelperspektivbild in dem C-Historienbereich (52) die aktuelle Umgebung des Fahrzeugs widerspiegelt; und
das B-Vogelperspektivbild in dem B-Historienbereich (53) unter Verwendung des A-Vogelperspektivbilds, das in dem realen A-Bereich (51a) gespeichert ist, entsprechend der Bewegungsgröße des Fahrzeugs konfiguriert, so dass das B-Historien-Vogelperspektivbild in dem B-Historienbereich (53) die aktuelle Umgebung des Fahrzeugs widerspiegelt,
wenn die Schattenbestimmungsvorrichtung (125) bestimmt, dass der Schatten in dem B-Vogelperspektivbild vorhanden ist, und wenn die Datenmengenbestimmungsvorrichtung (145) bestimmt, dass eine Menge von B-Historien-Vogelperspektivbilddaten größer oder gleich einer vorgegebenen Menge ist.

4. Vorrichtung zur Steuerung der Anzeige von Bildern einer Fahrzeugumgebung nach einem der Ansprüche 1 bis 3,
wobei die erste Historienbildkonfigurationsvorrichtung (140):
nacheinander den realen A-Bereich (51a), den realen B-Bereich (51b) und den C-Historienbereich (52) aktualisiert, so dass das Vogelperspektivbild sich in einem Vereinigungsbereich, der einen A-Bereich, der ein Anzeigebereich des A-Vogelperspektivbilds ist, einen B-Bereich, der ein Anzeigebereich des B-Vogelperspektivbilds ist, und einen C-Bereich, der ein Anzeigebereich des C-Vogelperspektivbilds ist, vereint, entsprechend der Bewegungsgröße des Fahrzeugs bewegt; und
nacheinander den B-Historienbereich (53) und den realen A-Bereich (51a) aktualisiert, so dass das Vogelperspektivbild sich in einem Vereinigungsbereich bewegt, der einen B-Bereich, der ein Anzeigebereich des B-Historien-Vogelperspektivbilds ist, und einen A-Bereich, der ein Anzeigebereich des A-Vogelperspektivbilds ist, vereint,
wenn die Schattenbestimmungsvorrichtung (125) bestimmt, dass der Schatten in dem B-Vogelperspektivbild nicht vorhanden ist, und
wobei die zweite Historienbildkonfigurationsvorrichtung (160):
nacheinander den realen A-Bereich (51a), den B-Historienbereich (53) und den C-Historienbereich (52) aktualisiert, so dass das Vogelperspektivbild sich in einem Vereinigungsbereich, der einen A-Bereich, der ein Anzeigebereich des A-Vogelperspektivbilds ist, einen B-Bereich, der ein Anzeigebereich des B-Vogelperspektivbilds ist, und einen C-Bereich, der ein Anzeigebereich des C-Vogelperspektivbilds ist, entsprechend der Bewegungsgröße des Fahrzeugs bewegt,
wenn die Schattenbestimmungsvorrichtung (125) bestimmt, dass der Schatten in dem B-Vogelperspektivbild vorhanden ist.

5. Anzeigeverfahren von Bildern einer Fahrzeugumgebung, das aufweist:
wiederholtes Erfassen eines Bilds um ein Fahrzeug herum von einer Kamera (1) im Fahrzeug, die in einem Fahrzeug montiert ist;
nacheinander Ausführen einer Vogelperspektivumwandlung des aufgenommenen Bilds, um ein Vogelperspektivbild zu erzeugen;
Teilen des Vogelperspektivbilds entlang einer Vorn-Hintenrichtung des Fahrzeugs teilt, um ein A-Vogelperspektivbild in einem vorgegebenen A-Bereich weiter von dem Fahrzeug weg und ein B-Vogelperspektivansicht in einem vorgegebenen B-Bereich näher an dem Fahrzeug zu erzeugen, Speichern des A-Vogelperspektivbilds in einem realen A-Bereich (51a) eines Speichers und Speichern des B-Vogelperspektivbilds in einem realen B-Bereich (51b) des Speichers,
Bestimmen, ob in dem Vogelperspektivbild, das in einem Teil oder dem gesamten realen B-Bereich (51b) gespeichert ist, ein Schatten vorhanden ist;
Berechnen einer Bewegungsgröße des Fahrzeugs basierend auf Fahrzeugverhaltensinformationen, die von dem Fahrzeug eingegeben werden;
Konfigurieren eines C-Vogelperspektivbilds in einem C-Historienbereich (52) unter Verwendung des B-Vogelperspektivbilds, das in dem realen B-Bereich (51b) gespeichert ist, entsprechend der Bewegungsgröße des Fahrzeugs, so dass das C-Vogelperspektivbild in dem C-Historienbereich (52) des Speichers zum Speichern eines Vogelperspektivbilds in einem C-Bereich außerhalb eines Fotografierbereichs der Kamera (1) im Fahrzeug eine Umgebungsanordnung des Fahrzeugs widerspiegelt, und Konfigurieren eines B-Historien-Vogelperspektivbilds in dem B-Historienbereich (53) unter Verwendung eines A-Vogelperspektivbilds, das in dem realen A-Bereich (51a) gespeichert ist, entsprechend der Bewegungsgröße des Fahrzeugs, so dass das B-Vogelperspektivbild in dem B-Historienbereich (53) des Speichers zum Speichern eines Vogelperspektivbilds in einem gleichen Bereich wie dem realen B-Bereich (51b) die aktuelle Umgebungsanordnung des Fahrzeugs widerspiegelt, wenn der Schatten in dem B-Perspektivbild nicht vorhanden ist;
Konfigurieren des C-Vogelperspektivbilds in dem C-Historienbereich (52) unter Verwendung des B-Vogelperspektivbilds, das in dem B-Historienbereich (53) gespeichert ist, entsprechend der Bewegungsgröße des Fahrzeugs, so dass das C-Vogelperspektivbild in dem C-Historienbereich (52) des Speichers eine aktuelle Umgebungsanordnung des Fahrzeugs widerspiegelt, und Konfigurieren des B-Historien-Vogelperspektivbilds in dem B-Historienbereich (53) unter Verwendung des A-Vogelperspektivbilds, das in dem realen A-Bereich (51a) gespeichert ist, entsprechend der Bewegungsgröße des Fahrzeugs, so dass das B-Vogelperspektivbild in dem B-Historienbereich (53) die aktuelle Umgebungsanordnung des Fahrzeugs widerspiegelt, wenn der Schatten in dem B-Vogelperspektivansicht vorhanden ist; und
Steuern der Bildanzeigevorrichtung (2), um das A-Vogelperspektivbild in dem realen A-Bereich (51a), das C-Vogelperspektivbild in dem C-Historienbereich (25) und das B-Vogelperspektivbild in dem realen B-Bereich (51b) oder das B-Vogelperspektivbild in dem B-Historienbereich (53) anzuzeigen.

6. Übergangsloses greifbares computerlesbares Medium, das Anweisungen aufweist, die von einem Computer ausgeführt werden, wobei die Anweisungen ein computerimplementiertes Verfahren zur Steuerung der Anzeige von Bildern einer Fahrzeugumgebung umfassen, wobei die Anweisungen umfassen:
wiederholtes Erfassen eines Bilds um ein Fahrzeug herum von einer Kamera (1) im Fahrzeug, die in einem Fahrzeug montiert ist;
nacheinander Ausführen einer Vogelperspektivumwandlung des aufgenommenen Bilds, um ein Vogelperspektivbild zu erzeugen;
Teilen des Vogelperspektivbilds entlang einer Vorn-Hintenrichtung des Fahrzeugs teilt, um ein A-Vogelperspektivbild in einem vorgegebenen A-Bereich weiter von dem Fahrzeug weg und ein B-Vogelperspektivansicht in einem vorgegebenen B-Bereich näher an dem Fahrzeug zu erzeugen, Speichern des A-Vogelperspektivbilds in einem realen A-Bereich (51a) eines Speichers und Speichern des B-Vogelperspektivbilds in einem realen B-Bereich (51b) des Speichers,
Bestimmen, ob in dem Vogelperspektivbild, das in einem Teil oder dem gesamten realen B-Bereich (51b) gespeichert ist, ein Schatten vorhanden ist;
Berechnen einer Bewegungsgröße des Fahrzeugs basierend auf Fahrzeugverhaltensinformationen, die von dem Fahrzeug eingegeben werden;
Konfigurieren eines C-Vogelperspektivbilds in einem C-Historienbereich (52) unter Verwendung des B-Vogelperspektivbilds, das in dem realen B-Bereich (51b) gespeichert ist, entsprechend der Bewegungsgröße des Fahrzeugs, so dass das C-Vogelperspektivbild in dem C-Historienbereich (52) des Speichers zum Speichern eines Vogelperspektivbilds in einem C-Bereich außerhalb eines Fotografierbereichs der Kamera (1) im Fahrzeug eine Umgebungsanordnung des Fahrzeugs widerspiegelt, und Konfigurieren eines B-Historien-Vogelperspektivbilds in dem B-Historienbereich (53) unter Verwendung eines A-Vogelperspektivbilds, das in dem realen A-Bereich (51a) gespeichert ist, entsprechend der Bewegungsgröße des Fahrzeugs, so dass das B-Vogelperspektivbild in dem B-Historienbereich (53) des Speichers zum Speichern eines Vogelperspektivbilds in einem gleichen Bereich wie dem realen B-Bereich (51b) die aktuelle Umgebungsanordnung des Fahrzeugs widerspiegelt, wenn der Schatten in dem B-Perspektivbild nicht vorhanden ist;
Konfigurieren des C-Vogelperspektivbilds in dem C-Historienbereich (52) unter Verwendung des B-Vogelperspektivbilds, das in dem B-Historienbereich (53) gespeichert ist, entsprechend der Bewegungsgröße des Fahrzeugs, so dass das C-Vogelperspektivbild in dem C-Historienbereich (52) des Speichers die aktuelle Umgebungsanordnung des Fahrzeugs widerspiegelt, und Konfigurieren des B-Historien-Vogelperspektivbilds in dem B-Historienbereich (53) unter Verwendung des A-Vogelperspektivbilds, das in dem realen A-Bereich (51a) gespeichert ist, entsprechend der Bewegungsgröße des Fahrzeugs, so dass das B-Vogelperspektivbild in dem B-Historienbereich (53) die aktuelle Umgebungsanordnung des Fahrzeugs widerspiegelt, wenn der Schatten in dem B-Vogelperspektivansicht vorhanden ist; und
Steuern der Bildanzeigevorrichtung (3), um das A-Vogelperspektivbild in dem realen A-Bereich (51a), das C-Vogelperspektivbild in dem C-Historienbereich (25) und das B-Vogelperspektivbild in dem realen B-Bereich (51b) oder das B-Vogelperspektivbild in dem B-Historienbereich (53) anzuzeigen.

## Revendications

1. Dispositif de commande d'affichage d'images des environs d'un véhicule, comprenant :
un dispositif d'acquisition (110) qui acquiert de manière répétée une image autour d'un véhicule depuis une caméra embarquée (1) montée dans le véhicule ;
un dispositif de conversion en vue aérienne (115) qui exécute séquentiellement une conversion en vue aérienne de l'image prise et crée une image en vue aérienne ;
un dispositif de sauvegarde divisé (120) qui divise l'image en vue aérienne selon une direction avant-arrière du véhicule pour créer une image en vue aérienne A dans une zone A prédéterminée plus éloignée du véhicule et une image en vue aérienne B dans une zone B prédéterminée plus proche du véhicule, sauvegarde l'image en vue aérienne A dans une zone réelle A (51a) d'une mémoire, et sauvegarde l'image en vue aérienne B dans une zone réelle B (51b) de la mémoire,
ledit dispositif de commande d'affichage d'images des environs d'un véhicule étant **caractérisé en ce qu'**il comprend en outre :
un dispositif de détermination d'ombre (125) qui détermine si une ombre apparaît ou non sur l'image en vue aérienne B sauvegardée dans tout ou partie de la zone réelle B (51b);
un dispositif de calcul de déplacement (135, 155) qui calcule une quantité de déplacement du véhicule sur la base d'informations sur le comportement du véhicule entrées à partir du véhicule ;
un premier dispositif de configuration d'image d'historique (140) qui :
configure une image en vue aérienne C dans une zone d'historique C (52) de la mémoire à l'aide de l'image en vue aérienne B sauvegardée dans la zone réelle B (51b) en fonction de la quantité de déplacement du véhicule de sorte que l'image en vue aérienne C dans la zone d'historique C (52) de la mémoire destinée à sauvegarder une image en vue aérienne dans une zone C en dehors d'une zone de photographie de la caméra embarquée (1) indique une disposition actuelle des environs du véhicule ; et
configure une image en vue aérienne d'historique B dans une zone d'historique B (53) à l'aide de l'image en vue aérienne A sauvegardée dans la zone réelle A (51a) en fonction de la quantité de déplacement du véhicule de sorte que l'image en vue aérienne B dans la zone d'historique B (53) de la mémoire destinée à sauvegarder une image en vue aérienne dans une même zone que la zone réelle B (51b) indique la disposition actuelle des environs du véhicule,
lorsque le dispositif de détermination d'ombre (125) détermine que l'ombre n'apparaît pas sur l'image en vue aérienne B ;
un second dispositif de configuration d'image d'historique (160) qui :
configure l'image en vue aérienne C dans la zone d'historique C (52) à l'aide de l'image en vue aérienne d'historique B sauvegardée dans la zone d'historique B (53) en fonction de la quantité de déplacement du véhicule de sorte que l'image en vue aérienne C dans la zone d'historique C (52) de la mémoire indique la disposition actuelle des environs du véhicule ; et
configure l'image en vue aérienne d'historique B dans la zone d'historique B (53) à l'aide de l'image en vue aérienne A sauvegardée dans la zone réelle A (51a) en fonction de la quantité de déplacement du véhicule de sorte que l'image en vue aérienne B dans la zone d'historique B (53) indique la disposition actuelle des environs du véhicule,
lorsque le dispositif de détermination d'ombre (125) détermine que l'ombre apparaît sur l'image en vue aérienne B ; et
un dispositif de commande d'affichage (130, 150) qui commande le dispositif d'affichage d'image (3) pour afficher l'image en vue aérienne A dans la zone réelle A (51a), l'image en vue aérienne C dans la zone d'historique C (52), et l'image en vue aérienne B dans la zone réelle B (51b) ou l'image en vue aérienne d'historique B dans la zone d'historique B (53).

2. Dispositif de commande d'affichage d'images des environs d'un véhicule selon la revendication 1, comprenant en outre :
un premier dispositif de commande d'affichage (130) qui commande le dispositif d'affichage d'image (3) pour afficher l'image en vue aérienne A dans la zone réelle A (51a), l'image en vue aérienne B dans la zone réelle B (51b), et l'image en vue aérienne C dans la zone d'historique C (52) lorsque le dispositif de détermination d'ombre (125) détermine que l'ombre n'apparaît pas sur l'image en vue aérienne B ; et
un second dispositif de commande d'affichage (150) qui commande le dispositif d'affichage d'image (3) pour afficher l'image en vue aérienne A dans la zone réelle A (51a), l'image en vue aérienne d'historique B dans la zone d'historique B (53), et l'image en vue aérienne C dans la zone d'historique C (52) lorsque le dispositif de détermination d'ombre (125) détermine que l'ombre apparaît sur l'image en vue aérienne B.

3. Dispositif de commande d'affichage d'images des environs d'un véhicule selon la revendication 1 ou 2, comprenant en outre :
un dispositif de détermination de quantité de données (145) qui détermine si au moins une quantité prédéterminée de données de l'image en vue aérienne d'historique B apparaît dans la zone d'historique B (53),
dans lequel le premier dispositif de configuration d'image d'historique (140) :
configure l'image en vue aérienne C dans la zone d'historique C (52) à l'aide de l'image en vue aérienne B sauvegardée dans la zone réelle B (51b) en fonction de la quantité de déplacement du véhicule de sorte que l'image en vue aérienne C dans la zone d'historique C (52) indique la disposition actuelle des environs du véhicule ; et
configure l'image en vue aérienne d'historique B dans la zone d'historique B (53) à l'aide de l'image en vue aérienne A sauvegardée dans la zone réelle A (51a) en fonction de la quantité de déplacement du véhicule de sorte que l'image en vue aérienne B dans la zone d'historique B (53) indique la disposition actuelle des environs du véhicule,
lorsque le dispositif de détermination d'ombre (125) détermine que l'ombre n'apparaît pas sur l'image en vue aérienne B, ou lorsque le dispositif de détermination d'ombre (125) détermine que l'ombre apparaît sur l'image en vue aérienne B, et le dispositif de détermination de quantité de données (145) détermine qu'une quantité de données de l'image en vue aérienne d'historique B n'est pas égale ou supérieure à une quantité prédéterminée, et
dans lequel le second dispositif de configuration d'image d'historique (160) :
configure l'image en vue aérienne C dans la zone d'historique C (52) à l'aide de l'image en vue aérienne d'historique B sauvegardée dans la zone d'historique B (53) en fonction de la quantité de déplacement du véhicule de sorte que l'image en vue aérienne C dans la zone d'historique C (52) indique la disposition actuelle des environs du véhicule ; et
configure l'image en vue aérienne d'historique B dans la zone d'historique B (53) à l'aide de l'image en vue aérienne A sauvegardée dans la zone réelle A (51a) en fonction de la quantité de déplacement du véhicule de sorte que l'image en vue aérienne d'historique B dans la zone d'historique B (53) indique la disposition actuelle des environs du véhicule,
lorsque le dispositif de détermination d'ombre (125) détermine que l'ombre apparaît sur l'image en vue aérienne B, et le dispositif de détermination de quantité de données (145) détermine qu'une quantité de données de l'image en vue aérienne d'historique B est égale ou supérieure à une quantité prédéterminée.

4. Dispositif de commande d'affichage d'images des environs d'un véhicule selon l'une quelconque des revendications 1 à 3,
dans lequel le premier dispositif de configuration d'image d'historique (140) :
met à jour séquentiellement la zone réelle A (51a), la zone réelle B (51b), et la zone d'historique C (52) de sorte que l'image en vue aérienne se déplace dans une zone de jonction qui réunit une zone A, qui est une zone d'affichage de l'image en vue aérienne A, une zone B, qui est une zone d'affichage de l'image en vue aérienne B, et une zone C, qui est une zone d'affichage de l'image en vue aérienne C, en fonction de la quantité de déplacement du véhicule ; et
met à jour séquentiellement la zone d'historique B (53) et la zone réelle A (51a) de sorte que l'image en vue aérienne se déplace dans une zone de jonction qui réunit une zone B, qui est une zone d'affichage de l'image en vue aérienne d'historique B, et une zone A, qui est une zone d'affichage de l'image en vue aérienne A,
lorsque le dispositif de détermination d'ombre (125) détermine que l'ombre n'apparaît pas sur l'image en vue aérienne B, et
dans lequel le second dispositif de configuration d'image d'historique (160) :
met à jour séquentiellement la zone réelle A (51a), la zone d'historique B (53), et la zone d'historique C (52) de sorte que l'image en vue aérienne se déplace dans une zone de jonction qui réunit une zone A, qui est une zone d'affichage de l'image en vue aérienne A, une zone B, qui est une zone d'affichage de l'image en vue aérienne d'historique B, et une zone C, qui est une zone d'affichage de l'image en vue aérienne C, en fonction de la quantité de déplacement du véhicule,
lorsque le dispositif de détermination d'ombre (125) détermine que l'ombre apparaît sur l'image en vue aérienne B.

5. Procédé de commande d'affichage d'images des environs d'un véhicule comprenant :
l'acquisition répétée d'une image autour d'un véhicule depuis une caméra embarquée (1) montée dans le véhicule ;
l'exécution séquentielle d'une conversion en vue aérienne de l'image prise pour créer une image en vue aérienne ;
la division de l'image en vue aérienne selon une direction avant-arrière du véhicule pour créer une image en vue aérienne A dans une zone A prédéterminée plus éloignée du véhicule, et une image en vue aérienne B dans une zone B prédéterminée plus proche du véhicule, en sauvegardant l'image en vue aérienne A dans une zone réelle A (51a) d'une mémoire, et en sauvegardant l'image en vue aérienne B dans une zone réelle B (51b) de la mémoire ;
le fait de déterminer si une ombre apparaît ou non sur l'image en vue aérienne sauvegardée dans tout ou partie de la zone réelle B (51b) ;
le calcul d'une quantité de déplacement du véhicule sur la base d'informations sur le comportement du véhicule entrées à partir du véhicule ;
la configuration d'une image en vue aérienne C dans une zone d'historique C (52) à l'aide de l'image en vue aérienne B sauvegardée dans la zone réelle B (51b) en fonction de la quantité de déplacement du véhicule de sorte que l'image en vue aérienne C dans la zone d'historique C (52) de la mémoire destinée à sauvegarder une image en vue aérienne dans une zone C en dehors d'une zone de photographie de la caméra embarquée (1) indique une disposition actuelle des environs du véhicule, et la configuration d'une image en vue aérienne d'historique B dans la zone d'historique B (53) à l'aide de l'image en vue aérienne A sauvegardée dans la zone réelle A (51a) en fonction de la quantité de déplacement du véhicule de sorte que l'image en vue aérienne d'historique B dans la zone d'historique B (53) de la mémoire destinée à sauvegarder une image en vue aérienne dans une même zone que la zone réelle B (51b) indique la disposition actuelle des environs du véhicule, lorsque l'ombre n'apparaît pas sur l'image en vue aérienne B ;
la configuration de l'image en vue aérienne C dans la zone d'historique C (52) à l'aide de l'image en vue aérienne d'historique B sauvegardée dans la zone d'historique B (53) en fonction de la quantité de déplacement du véhicule de sorte que l'image en vue aérienne C dans la zone d'historique C (52) de la mémoire indique une disposition actuelle des environs du véhicule, et la configuration de l'image en vue aérienne d'historique B dans la zone d'historique B (53) à l'aide de l'image en vue aérienne A sauvegardée dans la zone réelle A (51a) en fonction de la quantité de déplacement du véhicule de sorte que l'image en vue aérienne d'historique B dans la zone d'historique B (53) indique la disposition actuelle des environs du véhicule, lorsque l'ombre apparaît sur l'image en vue aérienne B ; et
la commande du dispositif d'affichage d'image (3) pour afficher l'image en vue aérienne A dans la zone réelle A (51a), l'image en vue aérienne C dans la zone d'historique C (52), et l'image en vue aérienne B dans la zone réelle B (51b) ou l'image en vue aérienne d'historique B dans la zone d'historique B (53).

6. Support tangible et non transitoire lisible par ordinateur, comprenant des instructions exécutées par un ordinateur, les instructions incluant un procédé mis en oeuvre par ordinateur pour commander l'affichage d'une image des environs d'un véhicule, les instructions incluant :
l'acquisition répétée d'une image autour d'un véhicule depuis une caméra embarquée (1) montée dans le véhicule ;
l'exécution séquentielle d'une conversion en vue aérienne de l'image prise pour créer une image en vue aérienne ;
la division de l'image en vue aérienne selon une direction avant-arrière du véhicule pour créer une image en vue aérienne A dans une zone A prédéterminée plus éloignée du véhicule, et une image en vue aérienne B dans une zone B prédéterminée plus proche du véhicule, en sauvegardant l'image en vue aérienne A dans une zone réelle A (51a) d'une mémoire, et en sauvegardant l'image en vue aérienne B dans une zone réelle B (51b) de la mémoire ;
le fait de déterminer si une ombre apparaît ou non sur l'image en vue aérienne sauvegardée dans tout ou partie de la zone réelle B (51b) ;
le calcul d'une quantité de déplacement du véhicule sur la base d'informations sur le comportement du véhicule entrées à partir du véhicule ;
la configuration d'une image en vue aérienne C dans une zone d'historique C (52) à l'aide de l'image en vue aérienne B sauvegardée dans la zone réelle B (51b) en fonction de la quantité de déplacement du véhicule de sorte que l'image en vue aérienne C dans la zone d'historique C (52) de la mémoire destinée à sauvegarder une image en vue aérienne dans une zone C en dehors d'une zone de photographie de la caméra embarquée (1) indique une disposition actuelle des environs du véhicule, et la configuration d'une image en vue aérienne d'historique B dans la zone d'historique B (53) à l'aide de l'image en vue aérienne A sauvegardée dans la zone réelle A (51a) en fonction de la quantité de déplacement du véhicule de sorte que l'image en vue aérienne d'historique B dans la zone d'historique B (53) de la mémoire destinée à sauvegarder une image en vue aérienne dans une même zone que la zone réelle B (51b) indique la disposition actuelle des environs du véhicule, lorsque l'ombre n'apparaît pas sur l'image en vue aérienne B ;
la configuration de l'image en vue aérienne C dans la zone d'historique C (52) à l'aide de l'image en vue aérienne d'historique B sauvegardée dans la zone d'historique B (53) en fonction de la quantité de déplacement du véhicule de sorte que l'image en vue aérienne C dans la zone d'historique C (52) de la mémoire indique la disposition actuelle des environs du véhicule, et la configuration de l'image en vue aérienne d'historique B dans la zone d'historique B (53) à l'aide de l'image en vue aérienne A sauvegardée dans la zone réelle A (51a) en fonction de la quantité de déplacement du véhicule de sorte que l'image en vue aérienne d'historique B dans la zone d'historique B (53) indique la disposition actuelle des environs du véhicule, lorsque l'ombre apparaît sur l'image en vue aérienne B ; et
la commande du dispositif d'affichage d'image (3) pour afficher l'image en vue aérienne A dans la zone réelle A (51a), l'image en vue aérienne C dans la zone d'historique C (52), et l'image en vue aérienne B dans la zone réelle B (51b) ou l'image en vue aérienne d'historique B dans la zone d'historique B (53).
